(19) 

**Europäisches Patentamt**
**European Patent Office**
**Office européen des brevets**

(11) **EP 4 038 997 B1**

(12) **EUROPEAN PATENT SPECIFICATION**

(45) Date of publication and mention
of the grant of the patent:
**22.04.2026  Bulletin 2026/17**

(21) Application number: **20780640.7**

(22) Date of filing: **23.09.2020**

(51) International Patent Classification (IPC):
*H04W 56/00* ^(2009.01)     *H04W 52/02* ^(2009.01)

(52) Cooperative Patent Classification (CPC):
**H04W 56/0015; H04W 52/0216; Y02D 30/70**

(86) International application number:
**PCT/EP2020/076611**

(87) International publication number:
**WO 2021/063774 (08.04.2021 Gazette 2021/14)**

(54) **SYNCHRONIZATION SIGNAL/ PHYSICAL BROADCAST CHANNEL BLOCK METHOD DETECTION AND MANAGEMENT**

SYNCHRONISATIONS-/ PHYSIKALISCHES RUNDFUNKKANALBLOCKVERFAHRENSDETEKTION UND -VERWALTUNG

DÉTECTION ET GESTION DE PROCÉDÉ POUR BLOC DE SIGNAL DE SYNCHRONISATION ET DE CANAL DE DIFFUSION PHYSIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.10.2019  US 201962909507 P**

(43) Date of publication of application:
**10.08.2022  Bulletin 2022/32**

(73) Proprietor: **Telefonaktiebolaget LM Ericsson (publ)**
**164 83 Stockholm (SE)**

(72) Inventors:
• **ALRIKSSON, Peter**
 **242 31 Hörby (SE)**
• **WITTENMARK, Emma**
 **222 40 Lund (SE)**

• **GRANT, Stephen**
 **PLEASANTON, CA 94566 (US)**

(74) Representative: **Ericsson**
**Patent Development**
**Torshamnsgatan 21-23**
**164 80 Stockholm (SE)**

(56) References cited:
**US-A1- 2018 220 442**

• **ERICSSON: "Enhancements to initial access procedure", vol. RAN WG1, no. Prague, CZ; 20190826 - 20190830, 17 August 2019 (2019-08-17), XP051765906, Retrieved from the Internet <URL:http://www.3gpp.org/ftp/tsg_ran/ WG1_RL1/TSGR1_98/Docs/R1-1909299.zip> [retrieved on 20190817]**

**Description**

TECHNICAL FIELD

The present invention relates generally to the field of wireless communication. More particularly, it relates to determination of Synchronization Signal/Physical Broadcast Channel (SS/PBCH) block detection methods.

BACKGROUND

New Radio (NR) defines two types of synchronization signals; Primary Synchronization Signals (PSS) and Secondary Synchronization Signals (SSS) and one broadcast channel; Physical Broadcast Channel (PBCH). Further PSS, SSS and PBCH are typically transmitted in one SS/PBCH block (or SSB for short, the terms SSB and SS/PBCH block may be used interchangeably in this disclosure). One or multiple SS/PBCH block(s) can be transmitted within one SS/PBCH period. For a half frame with SS/PBCH blocks, the first symbol indexes for candidate SS/PBCH blocks are determined according to the subcarrier spacing of SS/PBCH blocks as described in 3GPP 38.213 v15.6.0.

The candidate SS/PBCH blocks in a half frame are indexed in an ascending order in time from 0 to L-1. A User Equipment (UE) typically determines the 2 Least Significant Bits (LSB), for L=4, or the 3 LSB bits, for L>4, of a SS/PBCH block index per half frame from a one-to-one mapping with an index of the DM-RS sequence transmitted in the PBCH. For L=64, the UE determines the 3 Most Significant Bits (MSB) of the SS/PBCH block index per half frame by PBCH payload bits. In addition, a half-frame indicator is present in the PBCH payload bits.

In Rel-15 the UE may assume that SS/PBCH blocks transmitted with the same block index on the same center frequency location are quasi co-located with respect to Doppler spread, Doppler shift, average gain, average delay, delay spread, and, when applicable, spatial Rx parameters. The UE shall not assume quasi co-location for any other SS/PBCH block transmissions.

However, according to Rel-16, the restriction that the UE shall not assume quasi colocation for any other SS/PBCH block transmissions may be relaxed due an increasing number of SS/PBCH block positions as a result of taking into account Listen Before Talk (LBT) procedures when accessing a carrier.

Hence there is a need for alternative solutions for handling usage of the two methods (using fixed positions according to Rel-15, or flexible positions according to Rel-16).

3GPP draft submitted by Ericsson "Enhancement to initial access procedure"; R1-1909299; vol. RAN WG1, no. Prague, CZ; 20190826-20190830, 17 August 2019, XP051765906 describes configuring a DRS transmission window with variable duration and informing the UE if the base station is intending to transmit in the full window or not.

US2018/220442 A1 describes a base station including a controller configured to perform a process of transmitting, in a specific frequency band shared by a plurality of operators and/or a plurality of communication systems, a burst signal including data or a control signal and a discovery reference signal including a reference signal and/or a synchronization signal. If there is a transmission duration of the discovery signal within a transmission duration of the burst signal after starting the transmission of the burst signal, the controller performs a process of transmitting the discovery reference signal even within the transmission duration of the burst signal.

SUMMARY

The current disclosure refers to example scenarios, and associated example problems, where embodiments may be applicable, e.g. the scenario when there is a need for determination of which method is used for transmitting SS/PBCH blocks. It should be noted that such scenarios, problems and applications are merely illustrative examples and are not intended as limiting. Contrarily, embodiments may be equally applicable in other scenarios where LBT procedures are used for communication.

It should be emphasized that the term "comprises/comprising" (replaceable by "includes/including") when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

It is an object of some embodiments to solve or mitigate, alleviate, or eliminate at least some of the above disadvantages and to provide methods for determination of which SS/PBCH block detection method should be applied.

The invention is according to the embodiments of the appended independent claims. Further detailed embodiments are outlined in the dependent claims.

An advantage of some embodiments is that a method is provided for enabling a communication terminal to determine whether the SS/PBCH blocks are transmitted according to a fixed transmission method or a non-fixed transmission method, and hence apply the correct detection method.

Another advantage of some embodiments is that for deployments where LBT failure is infrequent the communication terminal can be configured with the Rel-15 method, which saves power and processing in the UE. For deployments where LBT failure is low but not infrequent enough to use the Rel-15 method, choosing a configuration with short window duration will also save power and processing in the communication terminal.

Another advantage of some embodiments is that a network node is enabled to determine which SS/PBCH block transmission method should be used based on network performance, and thus improve overall network performance.

Another advantage of some embodiments is that a method is provided enabling simple coexistence between 3GPP Rel-15 and 3GPP Rel-16 applications.

Another advantage of some embodiments is that wireless communication performance is enhanced.

BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.

Fig. 1 is a flowchart illustrating example method steps according to some embodiments;

Fig. 2 is a flowchart illustrating example method steps according to some embodiments;

Fig. 3 is a block diagram illustrating an example computer program product according to some embodiments;

Fig. 4 is a block diagram illustrating an example apparatus according to some embodiments; and

Fig. 5 is a block diagram illustrating an example apparatus according to some embodiments;

DETAILED DESCRIPTION

As already mentioned above, it should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

It should be noted that when a user equipment (UE) is referred to herein the term is meant to encompass any suitable communication device, not necessarily operated by any user.

In the following, embodiments will be described where determination of which SS/PBCH block detection method should be applied during communication.

It should also be noted that the terms SS/PBCH block and SSB (Synchronization Signal Block) may be used interchangeably in this disclosure.

As noted previously, NR defines two types of synchronization signals; PSS and SSS and one broadcast channel; PBCH. Further PSS, SSS and PBCH are transmitted in one SS/PBCH block or SSB for short. One or multiple SS/PBCH block(s) can be transmitted within one SS/PBCH period. Furthermore, the SS/PBCH blocks can be transmitted according to a pattern/case denoted as patter A, B, C, D, E in 3GPP 38.213.

For a half frame with SS/PBCH blocks, the first symbol indexes for candidate SS/PBCH blocks are determined according to the subcarrier spacing of SS/PBCH blocks as described in 3GPP 38.213 v15.6.0.

The candidate SS/PBCH blocks in a half frame are indexed in an ascending order in time from 0 to L-1. A UE determines the 2 Least Significant Bits (LSB), for L=4, or the 3 LSB bits, for L>4, of a SS/PBCH block index per half frame from a one-to-one mapping with an index of the DM-RS sequence transmitted in the PBCH. For L=64, the UE determines the 3 Most Significant Bits (MSB) of the SS/PBCH block index per half frame by PBCH payload bits. In addition, a half-frame indicator is present in the PBCH payload bits.

In Rel-15 the UE may assume that SS/PBCH blocks transmitted with the same block index on the same center frequency location are quasi co-located with respect to Doppler spread, Doppler shift, average gain, average delay, delay spread, and, when applicable, spatial Rx parameters. The UE shall not assume quasi co-location for any other SS/PBCH block transmissions.

The SS/PBCH block index is used in for different purposes:

Frame timing establishment

By determining the SS/PBCH block index (from the DM-RS sequence and PBCH payload), the half-frame indicator (from the PBCH payload) and the first symbol index of SS/PBCH blocks (from the specification) the UE can establish the start of the radio frame.

Random Access Channel (RACH) procedure

A UE is provided a number N of SS/PBCH blocks associated with one Primary RACH (PRACH) occasion and a number R of contention-based preambles per SS/PBCH block by higher layer parameter (ssb-perRACH-OccasionAndCB-PreamblesPerSSB). If N<1, one SS/PBCH block is mapped to 1/N consecutive PRACH occasions. If, N>=1, R contention based preambles with consecutive indexes associated with SS/PBCH block, n 0<=n<=N-1, per PRACH occasion start from preamble index n*64/N. SS/PBCH block indexes are mapped to PRACH occasions in the following order:

- First, in increasing order of preamble indexes within a single PRACH occasion.

- Second, in increasing order of frequency resource indexes for frequency multiplexed PRACH occasions.

- Third, in increasing order of time resource indexes for time multiplexed PRACH occasions within a PRACH slot.

- Fourth, in increasing order of indexes for PRACH slots.

Thus, to summarize, there is typically a mapping from SS/PBCH block index to preamble and/or PRACH occasion.

Radio Resource Management (RRM) Measurements

SS reference signal received power (SS-RSRP) is defined as the linear average over the power contributions (in [W]) of the resource elements that carry secondary synchronization signals (SS). The measurement time resource(s) for SS-RSRP are confined within SS/PBCH Block Measurement Time Configuration (SMTC) window duration.
SS-RSRP should typically be measured only among the reference signals corresponding to SS/PBCH blocks with the same SS/PBCH block index and the same physical-layer cell identity.

Radio Link Monitoring

A UE can typically be configured with a set of resource indexes, through a corresponding set of higher layer parameters (RadioLinkMonitoringRS), for radio link monitoring by higher layer parameter (failureDetectionResources). The UE is provided by higher layer parameter (RadioLinkMonitoringRS), with either a CSI-RS resource configuration index, by higher layer parameter csi-RS-Index, or a SS/PBCH block index, by higher layer parameter ssb-Index.

Operation in unlicensed spectrum

In unlicensed spectrum, transmissions are often (depending on regulation) subject to LBT, thus access to the medium cannot be guaranteed. To mitigate this problem the transmitter is often given a window in which transmissions can occur instead of fixed time locations. For example, in Rel-13 LAA the discovery reference signal (DRS) is allowed to move in the discovery timing measurement configuration window (DMTC).
A similar approach has been agreed for the SS/PBCH block(s) for NR-U in Rel-16, where instead of the L = 4/8 SSB positions that are defined in Rel-15, Y = 10/20 SSB positions are defined. The SSB positions are contained in a so-called DRS transmission window of maximum length 5ms:

The agreement being:

The maximum DRS transmission window duration is 5 ms.

- The maximum number of candidate SSB positions within a DRS transmission window, Y, is selected as Y = 10 for 15 kHz SCS and Y = 20 for 30 kHz SCS.
  Note: The number of starting points for DRS transmissions with the 5 ms window that can use a Cat. 2 LBT is to be discussed further as part of channel access discussions.

- FFS: If the DRS transmission window is configurable, and if yes, how to configure and indicate the window, including the range of configurable values.

Agreement:

UE determines serving cell timing from the detected SSB candidate position, where the SSB candidate positions within the DRS transmission window are indexed from 0,...,Y-1 (Y = 10 for 15 kHz SCS and Y = 20 for 30 kHz SCS).

Agreement:

The mechanism to determine serving cell timing is as follows:

- The SS/PBCH block position index within a DRS transmission window is detected using a combination of PBCH DMRS sequence index and 1 bit/2 bits for 15 kHz SCS/30 kHz SCS of the 3 available bits in the PBCH payload (not in MIB) originally used in Rel-15 FR2 for MSB SSB index

- 10-bits SFN and half-frame indicator are indicated as in Rel-15

- PBCH payload size is not increased compared to Rel-15
  oFFS: Whether reuse of other available bits in PBCH payload is also required for timing determination

- If the UE is required to perform PBCH decoding of neighbor cell(s) (e.g., in asynchronous deployments), an explicit time allowance for acquisition of SSB index is provided to the UE

As described previously, in Rel-15 the UE can assume that two SSBs that are transmitted in the same SSB position (i.e. has the same SSB index) are quasi co-located with each other. Further, the UE shall typically not assume quasi co-location (QCL) for any other SS/PBCH block transmissions. In Rel-16 when the number of SSB positions has been increased to account for LBT, and thus an SSB can be transmitted in any of the Y positions, the restriction "the UE shall not assume quasi co-location for any other SS/PBCH block transmissions", may need to be relaxed. This has also been agreed for Rel-16 where the following mechanism has been defined:

Agreement:

For a cell (either serving or a neighbour cell), UE may assume a QCL relation between SS/PBCH blocks within or across DRS transmission or measurement windows that have the same value of modulo(A, Q), once Q is known to the UE

- A is the PBCH DMRS sequence index.
  Note: This agreement extends a prior agreement for serving cells on QCL relation between SS/PBCH blocks to neighbour cells

Agreement:

For purposes of SSB QCL derivation, the following values of Q are supported: {1, 2, 4, 8}.

- FFS: Further down-selection of allowed values.

To allow the UE to be able to determine which of the two methods for SSB transmission and QCL determination (fixed positions as in Rel-15 baseline or at flexible positions in a DRS transmission window as the Rel-16 extension allows) to apply a method is typically needed.
Thus according to some embodiments, presented herein is a method for determining if SSB(s) are transmitted at fixed locations as in Rel-15 or at flexible positions in a DRS transmission window as allowed by Rel-16.
For the sake of description, it is defined the Rel-15 method, where SSB(s) are transmitted at fixed time positions and the QCL relation is directly determined by the SSB position as method A (in this disclosure the method A is associated with a first SS/PBCH block detection method, e.g. if method A is used to transmit the blocks, then the first SS/PBCH block detection method is used to detect them). Further the method as specified in Rel-16, where SSB(s) can be flexible transmitted in a DRS transmission window of maximum length 5ms and the QCL relation is determined using the modulo function and the parameter Q is referred to as method B (in this disclosure the method B is associated with a second SS/PBCH block detection method, e.g. if method B is used to transmit the blocks, then the second SS/PBCH block detection method is used to detect them).

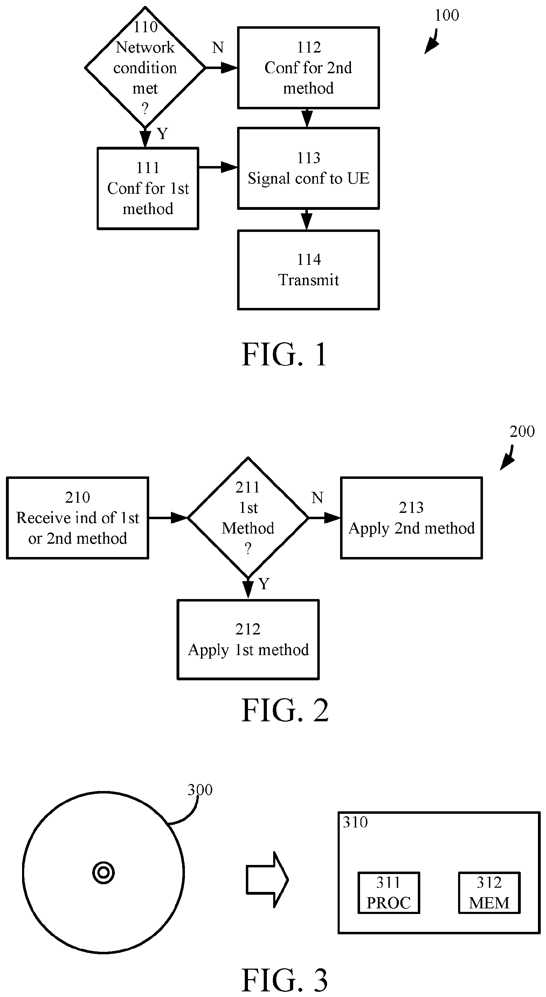

Fig. 1 illustrates an example method 100 according to some embodiments.

The method 100 may be a method of a network node operating in a communication network. The method being for synchronization signal /Primary Block Channel, SS/PBCH, block management.

The network node may e.g. be a base station, an eNodeB, a gNB, an access point, a central server etc.

The communication network may be a new radio network. The communication network may utilize different types of Radio Access networks. The communication network may be a 2G, 3G, 4G, 5G, etc. type of network.

The method is for synchronization signal and Physical Broadcast Channel, SS/PBCH, block management. The method 100 starts in step 110 with determining whether a network condition is met. Then the method continues in step 111 with signalling to a communication terminal to apply a first detection method for SS/PBCH block detection when the network condition is met (Y-path out of 110).

The method may, in some embodiments, continue to step 112 with signalling to the communication terminal to apply a second detection method for SS/PBCH block detection when the network condition is not met (N-path out of 110).

The method may then (regardless of whether it continued to step 111 or 112) continue in step 113 with the network node transmitting SS/PBCH blocks (to the communication terminal) according to the second SS/PBCH block detection method (also denoted as the second detection method in this disclosure), or according to the first SS/PBCH block detection method (also denoted as the first detection method in this disclosure), based on whether the network condition is met.

The network condition may relate to at least one of a current and/or a historical Listen Before Talk, LBT, success rate in the communication network; a delay of SS/PBCH block transmissions; a measured Received Signal Strength Indicator, RSSI; and a channel occupancy.

For example, the network condition is typically determined to be met when at least one of the following is determined to be true: The current and/or historical LBT success rate is above a predetermined LBT-threshold; the delay of the SS/PBCH block transmissions is below a predetermined SS/PBCH-threshold; the measured RSSI is below a predetermined RSSI-threshold; and the measured channel occupancy is below a predetermined occupancy-threshold.

Typically, the first detection method using fixed positions according to Rel-15 is power efficient, but not very flexible. Whereas the second detection method using a DRS-transmission window is flexible, but not very power efficient in relation to the first detection method.

Hence, when LBT is historically known to be successful, the first detection method is usually advantageous. This since if LBT is mostly successful, it's an indication that the load on the communication network (i.e. users who want to access the carriers for transmission) is manageable and there is little waiting time for having access. In such a scenario, there is no pressing need for SS/PBCH transmission and detection that is flexible, and the power saving aspect is of higher value.

Thus, in some embodiments, the network node determines to transmit SS/PBCH blocks according to the first or second detection method based on the LBT success rate of historic SS/PBCH block transmissions. If the success rate is above a threshold, transmission according to the first detection method is used and if it is below the threshold transmission according to the second detection method is used.

The same reasoning typically applies for when the delay of SS/PBCH block transmissions is low (i.e. below a predetermined threshold), and/or the measured RSSI is relatively low, and/or the measured channel occupancy is below a predetermined occupancy threshold.

Hence, in some embodiments, the network node determines to transmit SS/PBCH blocks according to the first or the second detection method based on the delay (measured from the first possible transmission opportunity to the actual transmission time) of SS/PBCH block transmissions. If the delay is below a threshold, transmission according to the first detection method is used and if it is above the threshold, transmission according to the second detection method is used.

In some embodiments, the network node determines to transmit SS/PBCH blocks according to the first or the second detection method based on the measured RSSI or channel occupancy. If the RSSI/channel occupancy is below a threshold, transmission according to the first detection method is used and if it is above the threshold, transmission according to the second detection method is used.

What is determined as high/low in this context is of course relative and may vary based on network scenario. A typical high LBT success rate is e.g. a success rate of above 75% (the LBT threshold may hence be at 75%). A typical low measured RSSI is -60dB (the RSSI may hence be -60dB). A typical low channel occupancy is 60% of the total channel capacity (the occupancy threshold may hence be 60%). However, other scenarios may have other definitions of high/and low and hence other thresholds. The values are something that may be determined dynamically by e.g. a network operator or network node or similar.

Hence, in scenarios when the few users are connected to the network and/or if the signal strength is weak, then the first detection method is advantageous to apply. The network node signals the use of the first detection method to the communication terminal, and then transmits the SS/PBCH blocks according to the first detection method.

In the same manner, when many users are connected to the network and/or the signal strength is good, then the second detection method is advantageous to apply. The network node signals the use of the second detection method to the communication terminal, and then transmits the SS/PBCH blocks according to the second detection method.

It should be noted that the network node does not apply the detection methods for detecting the SS/PPBCH blocks, but will transmit the blocks according to Rel-15 or Rel-16 transmission agreements. Hence, if the network node transmits according to the Rel-15 agreement, the communication terminal should apply the first detection method, which the network node signals to the communication terminal. In the same manner, if the network node transmits according to the Rel- 16 agreement, the communication terminal should apply the second detection method, which the network node signals to the communication terminal.

Furthermore, if the network node has determined to transmit the SS/PBCH blocks according to the second detection method based on any of the above give criteria (LBT, success, latency, occupancy, and RSSI) , it may further determines the window duration based on any of the above criteria (LBT-success, latency, occupancy and RSSI). A number of thresholds are used to determine if the window duration should be set to for example 1, 2, 3, 4, or 5 ms.

In some embodiments, the step 114 of the method 100 may comprise transmitting the SS/PBCH blocks according to the first detection method by transmitting the SS/PBCH blocks at fixed time positions.

Additionally or alternatively, in some embodiments, step 114 of the method 100 may comprise transmitting the SS/PBCH block at any position within a length of a Discovery reference Signal, DRS, -transmission window.

Additionally or alternatively, in some embodiments, step 114 of the method 100 may comprise transmitting the SS/PBCH blocks according to the second detection method by determining a modulo parameter Q for determination of quasi co-location, QCL, of the SS/PBCH blocks and the any position is a position i which is to be quasi co-located with an SS/PBCH block transmitted in position i+k*Q, where k=0,1,2,.., and where available positions in the DRS transmission window is determined by sub-carrier spacing for the transmission.

When using fixed positions for transmitting the SS/PBCH blocks (i.e. according to the first detection method), the wireless communication terminal will know where the quasi colocations are, and there is hence no need to a supply a parameter defining this. However, when the transmissions occur at unfixed positions, and a transmission window (e.g. a DRS transmission window) is used (transmission according to the second detection method), then the communication terminal should preferably be informed of where is may expect/look for quasi colocation of the transmitted blocks.

Hence, if the communication terminal receives a Q parameter specifying the quasi colocation of the blocks, then it will know that the second detection method is to be applied, and that it should look for quasi co-located blocks according to the received parameter.

In some embodiments, the step 113 of the method 100, signalling to the communication terminal to apply the first detection method, may comprises at least one of:

- signalling a flag to the communication terminal;
- using a codepoint in one or both reserved bits in a PBCH-payload for indicating use of the first detection method;
- coupling the first detection method to a first SS/PBCH block pattern; and
- coupling the first detection method to a first SS/PBCH block raster point group.

For example setting a flag may comprise setting a bit in a message to the communication terminal. Hence in some embodiments an explicit flag (one bit) is used to indicate use of the first or second detection method. The configuration is given to the communication terminal as part of the system information, in MIB.

For handover and SCell addition purposes the configuration can be given using dedicated RRC signalling.

In some embodiments, signalling the flag may hence comprise at least one of setting the flag in a system information, SI, message to be transmitted to the communication terminal and signalling the flag to the network terminal through dedicated Radio Resource Control, RRC-signalling.

For example, using a code point in one or more (e.g. one or both) reserved bits in the PBCH-payload may comprise using one codepoint of one or more of the reserved bits $\overline{a}_{\overline{A}+6}$ and $\overline{a}_{\overline{A}+7}$ in the PBCH payload to indicate whether the communication terminal shall use the first or the second detection method. In some embodiments, if two of the bits are used, the two bits can take on values (00, 01, 10, and 11). If e.g. the value 11 is signalled by the network node, the communication terminal uses the first detection method. If any of the other values are signalled, the communication terminal uses the second detection method.

In some embodiments, if several code points are used to indicate the second detection method, different code points can indicate different window durations to the communication terminal.

In some embodiments, the network node may couple the choice of detection method to the SS/PBCH block pattern. For example, a new pattern F can be defined and if a frequency band uses pattern F (as specified in 3GPP 38.101-1), SS/PBCH blocks are transmitted according to the second detection method which is applied by the communication terminal.

In some embodiments, the choice of detection method is coupled to the SS/PBCH block synchronization (sync) raster points that are used. For example, the SS/PBCH block sync raster points used for a deployment when the second detection method is to be used could be different from the SS/PBCH block synch raster points that are used for a deployment where the first detection method is to be used.

For example, the sync raster points can be split into two groups, where sync raster points in the first group correspond to the first detection method and sync raster points in the second group to the second detection method.

In some embodiments, the method step 112, signalling to the network terminal to apply the second detection method, of the method 100 may comprises at least one of:

- configuring the transmission window with at least a length or a duration parameter;
- configuring a message comprising the determined Q parameter for the communication terminal;
- using a codepoint in one or more reserved bits in a PBCH-payload to indicate use of the second detection method;
- coupling the second detection method to a second SS/PBCH block pattern; and
- coupling the second detection method to a second SS/PBCH Block sync raster point group.

In some embodiments, configuring the transmission window may comprise configuring the transmission window to the communication terminal. Hence, when the configuration is present, the communication terminal applies the configuration and uses the second detection method. If the configuration is not present, the communication terminal uses first detection method.

For example, the transmission window configuration should preferably at least include a length or a duration parameter. Alternatively or additionally, an offset and a periodicity may be configured. The configuration is signalled to the communication terminal as part of the system information, e.g. in SIB1 or some other SI message. In case the configuration only contains a length/duration, it may be signalled to the communication terminal as part of MIB. For handover and SCell addition purposes the configuration can be given using dedicated RRC signalling.

In some embodiments, the configuration may be used to determine use of the first detection method as well. For example, the length/duration is signalled as zero, the communication terminal applies the first detection method.

The length/duration typically indicates where the window ends. The starting point is fixed equal to the starting point of the half-frame in which the UE detected the SS/PBCH block(s).

The window then repeats every X ms where X is configured in ssb-PeriodicityServingCell ENUMERATED {ms5, ms10, ms20, ms40, ms80, ms160}, which is defined in Rel-15.

In some embodiments, the length parameter may indicate a slot or resource block, etc. In some embodiments, the duration parameter may indicate time in e.g. $\mu$s, ms, etc.

In some embodiments, length may have the same meaning as duration and may hence only be two different words for the same thing.

In some embodiments, the parameter Q is configured to the communication terminal. If the configuration is present, the communication terminal applies the configuration and uses the second detection method. If the configuration is not present, the communication terminal uses the first detection method.

In some embodiments, if Q is signaled as zero, the communication terminal may apply the first detection method. The configuration is signaled to the communication terminal as part of the system information, e.g. in MIB or SIB1 or some other SI message. For handover and SCell addition purposes the configuration can be given using dedicated RRC signaling. For RRM measurements Q may be signaled as part of the measurement configuration (MeasObjectNR, SIB2, SIB4). For RRCRelease with redirect info, Q is signaled as part of the CarrierInfoNR IE.

In some embodiments, Q may be signaled and/or set as a part of the window configuration.

In some embodiments, the choice of detection method to be used may be coupled to the frequency band. For example, if the communication terminal is operating on band n46, the second detection method is used.

The base station (or network node, the terms may be used interchangeably in this disclosure) may e.g. signal to the communication terminal that it should operate at a certain band.

In some embodiments, the communication terminal may signal to the base station which band it is operating on and the base station may signal to the communication terminal which detection method should be applied, based on what frequency band the terminal is operating on.

In some embodiments, the use of detection method may be pre-configured to each band, hence a network terminal is aware of which detection method should be applied when utilizing a certain band.

Fig. 2 illustrates an example method 200 according to some embodiments. The method 200 may be a method of a communication terminal operating in a communication network. The method being for synchronization signal/Primary Block Channel, SS/PBCH, block, detection.

The communication terminal may e.g. be a wireless communication device, communication device, user equipment, mobile device, mobile communication device, access terminal etc. The communication terminal may e.g. be a mobile phone, laptop, tablet or similar.

The communication network may be a new radio network. The communication network may utilize different types of Radio Access networks. The communication network may be a 2G, 3G, 4G, 5G, etc. type of network.

The method 200 starts in step 210 with receiving signalling from a network node associated with the communication network, the signalling indicative of a SS/PBCH block detection method.

The network node may e.g. be the network node as described in conjunction with Fig. 1, and configured to carry out the method 100.

Then the method 200 continues in step 211 with determining whether the indicated SS/PBCH block detection method is a first SS/PBCH block detection method or a second SS/PBCH block detection method based on the received signalling.

If/when in step 211, it is determined that the indicated detection method is the first detection method (Y-path out of 211) the method 200 continues to step 212, whereas when it is determined that the indicated detection method is not the first detection method (N-path out of 211, i.e. it is the second detection method) the method 200 continues in step 213.

Then, the method continues with applying, based on the determination, the first (step 212) or the second (step 213) SS/PBCH block detection method for SS/PBCH block detection.

In some embodiments, the steps 210 and 211 of receiving signalling and determining whether the indicated SS/PBCH block detection is the first or the second detection method may comprise: receiving (step 210) a configuration of a, transmission window and determining whether the detection window configuration comprises at least one of a length and duration parameter and applying (step 213) the second SS/PBCH block detection method when it is determined that the DRS detection window configuration does comprise at least one of a length and duration parameter.

In some embodiments, the transmission window is a Discovery Reference Signal, DRS, transmission window.

In some embodiments, when the configuration is present, the communication terminal applies the configuration and uses the second detection method. If the configuration is not present, the communication terminal uses first detection method.

The transmission window configuration should preferably at least include a length or a duration parameter. In addition, the configuration may comprise an offset and a periodicity. The configuration may be signalled to the communication terminal as part of the system information, e.g. in SIB1 or some other SI message. In case the configuration only contains a length/duration, it may be signalled to the communication terminal as part of MIB. For handover and SCell addition purposes the configuration can be signalled using dedicated RRC signalling. In some embodiments, the configuration may be used to determine use of the first detection method as well. E.g., the length/duration is signalled as zero, the communication terminal applies the first detection method.

The length/duration typically indicates where the window ends. The starting point is fixed equal to the starting point of the half-frame in which the UE detected the SS/PBCH block(s).

The window then repeats every X ms where X is configured in ssb-PeriodicityServingCell ENUMERATED {ms5, ms10, ms20, ms40, ms80, ms160}, which is defined in Rel-15.

In some embodiments, the length parameter may indicate a slot or resource block, etc. In some embodiments, the duration parameter may indicate time in e.g. $\mu$s, ms, etc.

In some embodiments, length may have the same meaning as duration and may hence only be two different words for the same thing.

In some embodiments, the steps of receiving signalling (step 210) and determining (step 211) whether the indicated SS/PBCH block detection is the first or the second detection method may comprise receiving a system information, SI, message or dedicated Radio Resource Control, RRC- signalling, determining whether the received signalling comprises a flag and applying the first SS/PBCH block detection method (step 212) when it is determined that the received signalling comprises a flag.

In some embodiments an explicit flag (one bit) is used to indicate use of the first or second detection method. The configuration is signalled to the communication terminal as part of the system information, in MIB.

For handover and SCell addition purposes the configuration can be given using dedicated RRC signalling.

In some embodiments, the steps of receiving signalling (step 210) and determining (step 211) whether the indicated SS/PB channel block detection method is the first SS/PBCH block detection method or the second SS/PBCH BLOCK detection method may comprise receiving a code point in one or more reserved bits in a Physical Broadcast Channel, PBCH, payload wherein at least one of the values 00, 01, 10 and 11 indicates the first SS/PBCH block detection method. Using a code point in one or more reserved bits in the PBCH-payload may e.g. comprise that one codepoint of one or more of the reserved bits $\overline{a}_{\overline{A}+6}$ and $\overline{a}_{\overline{A}+7}$ in the PBCH payload is used to indicate whether the communication terminal shall use the first or the second detection method. In some embodiments, if two of the bits are used, the two bits can take on values (00, 01, 10, and 11). If e.g. the value 11 is signalled by the network node, the communication terminal uses the first detection method. If any of the other values are signalled, the communication terminal uses the second detection method. It should be noted that the above is just an example, and any of the indicated values are available for indicating a certain method, as long as the same value is not used to indicate both the first and the second detection method.

In some embodiments, if several code points are used to indicate the second detection method, different code points can indicate different window durations to the communication terminal.

This is an effective way to provide more information to the communication terminal on where/when it may detect the SS/PBCH blocks.

Hence, the communication terminal may check the value of the code point in order to determine which detection method to use.

In some embodiments, the steps of receiving (step 210) signalling and determining (step 211) whether the indicated SS/PBCH block detection method is the first SS/PBCH block detection method or the second SS/PBCH BLOCK detection method comprises receiving an indication of a SS Block Pattern for reception of the SS/PBCH block, applying the first SS/PBCH block detection method (step 212) if the SS/PBCH pattern indication indicates a block pattern and applying the second SS/PBCH block detection method (step 213) if the SS/PBCH pattern indication indicates a second block pattern.

In some embodiments, the network node may couple the choice of detection method to the SS/PBCH block pattern. For example, a new pattern F can be defined and if a frequency band uses pattern F (as specified in 3GPP 38.101-1), SS/PBCH blocks are transmitted according to the second detection method which detection method is applied by the communication terminal. The network node may signal an indication to the communication terminal of which block pattern is going to be used. Based on this, the communication terminal will have knowledge of which detection method should be applied.

In some embodiments, the steps of receiving signalling (step 210) and determining (step 211) whether the indicated SS/PBCH block detection method is the first SS/PBCH block detection method or the second SS/PBCH block detection method comprises receiving an indication (step 210) of one or more SS/PBCH block synchronization (sync) raster point groups and determining (step 211) whether the one or more SS/PBCH block sync raster point groups are indicative of the first or the second SS/PBCH block detection method.

In some embodiments, the choice of detection method is coupled to the SS/PBCH block sync raster points that are used. For example, the SS/PBCH block sync raster points used for a deployment where the second detection method is to be used could be different from the SS/PBCH block sync raster points that are used for a deployment where the first detection method is to be used. The communication terminal may be informed of this by the network node.

In some embodiments, the steps of receiving signalling (step 210) and determining (step 211) whether the indicated SS/PBCH block detection method is the first SS/PBCH block detection method or the second SS/PBCH block detection method may comprise receiving signalling and determining whether the signalling comprises a Q parameter, applying (step 213) the second SS/PBCH block detection method when it's determined that the signalling comprises a Q parameter and applying the Q parameter to calculate a quasi-colocation of the SS/PBCH blocks.

In some embodiments, the parameter Q is configured to the communication terminal. If the configuration is present, the communication terminal applies the configuration and uses the second detection method (step 213). If the configuration is not present, the communication terminal uses the first detection method (step 212).

In some embodiments, if Q is signaled as zero, the communication terminal may apply the first detection method (step 212). The configuration is signaled to the communication terminal as part of the system information, e.g. in MIB or SIB1 or some other SI message. For handover and SCell addition purposes the configuration can be given using dedicated RRC signaling. For RRM measurements Q may be signaled as part of the measurement configuration (MeasObjectNR, SIB2, SIB4). For RRCRelease with redirect info, Q is signaled as part of the CarrierInfoNR IE.

In some embodiments, Q may be signaled and/or set as a part of the window configuration.

Fig. 3 illustrates a computer A computer program product 300 comprising a non-transitory computer readable medium. The non-transitory computer readable medium has stored there on a computer program comprising program instructions, wherein the computer program is configured to be loadable into a data-processing unit 310, comprising a processor (PROC) 311 and a memory (MEM) 312 associated with or integral to the data-processing unit 310. When loaded into the data-processing unit 310, the computer program is configured to be stored in the memory 312, wherein the computer program, when loaded into and run by the processor 311 is configured to cause execution of method steps according to any of the methods described in conjunction with Figs. 1-2 or otherwise described herein.

According to some embodiments, the computer program product comprises a computer readable medium such as, for example a universal serial bus (USB) memory, a plug-in card, an embedded drive or a read only memory (ROM).

The processing unit 310 may e.g. be comprised in communication terminal (e.g. the communication terminal described in conjunction with any of the previous figures 1-2) or a network node (e.g. the network node as described in conjunction with any of the previous figures 1-2).

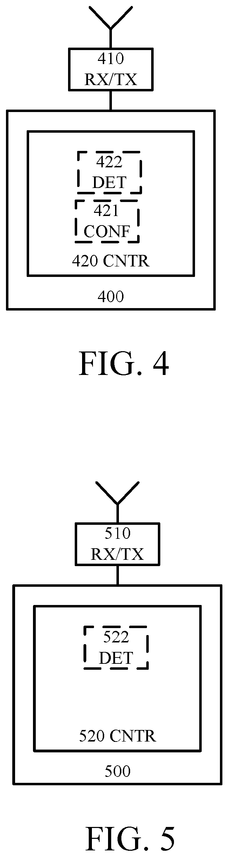

Fig. 4 illustrated an example apparatus 400 according to some embodiments. The apparatus 400 comprises a controlling circuitry (CNTR) 420 (e.g. a controller) configured for Synchronization Signal/Physical Broadcast Channel, SS/PBCH, block management. The controlling circuitry 420 may be configured to carry out the method 100 as described in conjunction with Fig. 1.

The controlling circuitry is configured to cause determination of whether a network condition is met (compare with method step 110). The controlling circuitry may e.g. comprise a determiner (or determining module, the terms may be used interchangeably) (DET) 422 for causing the determination.

The controlling circuitry 420 is further configured to cause signalling to a communication terminal to apply a first detection method for SS/PBCH block detection if it is determined that the network condition is met (compare with method step 111 and 113).

The apparatus 400 may e.g. comprise a transceiver circuit (RX/TX) 410 comprising an antenna, and the controlling circuitry may be configured to cause the transceiver circuitry to signal the communication terminal.

The controlling circuitry may further be configured to cause (e.g. by causing the transceiver circuit) signalling to the communication terminal to apply a second detection method for SS/PBCH block detection when it is determined that the network condition is not met (compare with method step 112 and 113).

The controlling circuit may further be configured to cause (e.g. by causing the transceiver circuit to transmit) transmission of SS/PBCH blocks according to the first SS/PBCH block detection method or the second SS/PBCH block detection method based on whether the network condition is determined to be met.

The network condition may relate to at least one of a current and/or a historical Listen Before Talk, LBT, success rate in the communication network; a delay of SS/PBCH block transmissions, a measured Received Signal Strength Indicator, RSSI; and a channel occupancy.

For example, the network condition is typically determined to be met (e.g. by the determiner 422 and/or the controlling circuitry 420) when at least one of the following is determined to be true: The current and/or historical LBT success rate is above a predetermined LBT-threshold; the delay of the SS/PBCH block transmissions is below a predetermined SS/PBCH-threshold; the measured RSSI is below a predetermined RSSI-threshold; and the measured channel occupancy is below a predetermined occupancy-threshold.

When LBT is historically known to be successful, the first detection method is usually advantageous. This since if LBT is mostly successful, it's an indication that the load on the communication network (i.e. users who want to access the carriers for transmission) is manageable and there is little waiting time for having access. In such a scenario, there is no large need for SS/PBCH transmission and detection that is flexible, and the power saving aspect is typically of higher value.

Thus, in some embodiments, the controlling circuitry 420 is configured to cause transmission of SS/PBCH blocks according to the first or second detection method based on the LBT success rate of historic SS/PBCH block transmissions. If the success rate is above a threshold, transmission according to the first detection method is caused and if it is below the threshold transmission according to the second detection method is caused.

The same reasoning typically applies for when the delay of SS/PBCH block transmissions is low (i.e. below a predetermined threshold), and/or the measured RSSI is relatively low, and/or the measured channel occupancy is below a predetermined occupancy threshold.

Hence, in some embodiments, the controlling circuitry is configured to cause transmission (e.g. by causing the transceiver circuit to transmit) of SS/PBCH blocks according to the first or the second detection method based on the delay (measured from the first possible transmission opportunity to the actual transmission time) of SS/PBCH block transmissions. If the delay is below a threshold, transmission according to the first detection method is caused and if it is above the threshold, transmission according to the second detection method is caused (compare with method step 114).

In some embodiments, the controlling circuitry 420 is configured to cause transmission (e.g. by causing the transceiver circuitry 410) of SS/PBCH blocks according to the first or the second detection method based on the measured RSSI or channel occupancy (compare with method step 114). If the RSSI/channel occupancy is below a threshold, transmission according to the first detection method is caused and if it is above the threshold transmission according to the second detection method is caused.

What is determined as high/low in this context is of course relative and may vary based on network scenario. A typical high LBT success rate is e.g. a success rate of above 75%. A typical low measured RSSI is -60dB. A typical low channel occupancy is 60% of the total channel capacity Hence, in scenarios when the few users are connected to the network and/or if the signal strength is weak, then the first detection method is advantageous to apply. The controlling circuitry is configured to cause signalling (e.g. by causing the transceiver circuitry 410 to signal) the use of the first detection method to the communication terminal, and causes transmission of the SS/PBCH blocks according to the first detection method.

In the same manner, when many users are connected to the network and/or the signal strength is good, then the second detection method is advantageous to apply. The controlling circuitry is configured to cause signalling (e.g. by causing the transceiver circuitry 410 to signal) the use of the second detection method to the communication terminal, and then cause transmission of the SS/PBCH blocks according to the second detection method.

It should be noted that the controlling circuitry does not apply the detection methods for detecting the SS/PPBCH blocks, but will cause transmission of the blocks according to the Rel-15 or Rel-16 transmission agreements (i.e. transmitting at fixed positions with known quasi location, or at variable positions within a DRS transmission window possibly using other quasi colocations). Hence, if the controlling circuitry causes transmission according to the Rel-15 agreement, the communication terminal should typically apply the first detection method, which the controlling circuitry is configured to signal to the communication terminal. In the same manner, if the controlling circuitry causes transmission according to the Rel-16 agreement, the communication terminal should typically apply the second detection method, which the controlling circuitry signals to the communication terminal.

Furthermore, if the controlling circuitry has determined to cause transmission of the SS/PBCH blocks according to the second detection method based on any of the above given criteria (LBT, success, latency, occupancy, and RSSI) , it may further cause determination of a window duration based on any of the above criteria (LBT-success, latency, occupancy and RSSI). A number of thresholds are used for causing determination of whether the window duration should be set to for example 1, 2, 3, 4, or 5 ms. For example, less favorable network conditions, such as if the LBT success rate is low, the latency is high, occupancy is high and RSSI is low may lead to longer window durations such as 3-5 ms. Similarly, better network conditions, such as if the LBT success rate is high, the latency is low, occupancy is low and RSSI is high, then a shorter window duration may be determined such as 1-3 ms.

A shorter window duration gives less time for detection but is cost efficient in terms of power and time. The shorter window duration is favorable when network conditions are good since the probability that successful detection is made during the short time span is higher compared to if a short duration is used when network conditions are less good.

The relative terms of good, bad, worse, high, low in this context are relative and are to a high extent governed by the applicable network scenario.

In some embodiments, the controlling circuitry may be configured to cause transmission (e.g. by causing the transceiver circuit) the SS/PBCH blocks according to the first detection method by causing transmission of the SS/PBCH blocks at fixed time positions (compare with method step 114).

Additionally or alternatively, in some embodiments, the controlling circuitry may be configured to cause transmission of the SS/PBCH blocks according to the second detection method by causing the transmission of the SS/PBCH block at any position within a length of a transmission window (e.g. a DRS transmission window).

Additionally or alternatively, in some embodiments, the controlling circuitry may be configured to cause transmission of the SS/PBCH blocks according to the second detection method by causing determination (e.g. by causing the determiner) of a modulo parameter Q for determination of quasi co-location, QCL, of the SS/PBCH blocks and the any position is a position i which is to be quasi co-located with an SS/PBCH block transmitted in position i+k*Q, where k=0,1,2,.., and where available positions in the transmission window is determined by sub-carrier spacing for the transmission.

In some embodiments, the controlling circuitry 420 may be further configured to cause at least one of:

- signalling of a flag to the communication terminal;
- usage of a codepoint in one or more reserved bits in a PBCH-payload for indicating use of the first detection method;
- coupling of the first detection method to a first SS/PBCH block pattern; and
- coupling of the first detection method to a first SS/PBCH block synchronization (sync) raster point group.

In some embodiments causing signalling of a flag may comprise causing setting of a flag by causing setting of a bit in a message to the communication terminal. Hence in some embodiments an explicit flag (one bit) is used to indicate use of the first or second detection method. The configuration may be signalled to the communication terminal as part of the system information, e.g. in MIB or SIB1 or some other SI message. For handover and SCell addition purposes the configuration can be given using dedicated RRC signalling.

In some embodiments, causing signalling of the flag may hence comprise at least one of causing setting of the flag in a system information, SI, message to be transmitted to the communication terminal and causing signalling of the flag to the communication terminal through dedicated Radio Resource Control, RRC-signalling.

Causing Usage of a code point in one or more reserved bits in the PBCH-payload may e.g. comprise causing usage of one codepoint of one or more of the reserved bits $\overline{a}_{\overline{A}+6}$ and $\overline{a}_{\overline{A}+7}$ in the PBCH payload is to indicate whether the communication terminal shall use the first or the second detection method. In some embodiments, if two of the bits are used, the two bits can take on values (00, 01, 10, and 11). If e.g. the value 11 is signalled by the network node, the communication terminal uses the first detection method. If any of the other values are signalled, the communication terminal uses the second detection method.

In some embodiments, if several code points are used to indicate the second detection method, different code points can indicate different window durations to the communication terminal.

In some embodiments, the controlling circuitry is configured to cause coupling of the choice of detection method to the SS/PBCH block pattern. For example, a new pattern F can be defined and if a frequency band uses pattern F (as specified in 3GPP 38.101-1), SS/PBCH blocks are transmitted according to the second detection method which is applied by the communication terminal.

In some embodiments, the choice of detection method is coupled to the SS/PBCH block raster points that are used. For example, the SS/PBCH block sync raster points used for a deployment when the second detection method is to be used could be different from the SS/PBCH block sync raster points that are used for a deployment where the first detection method is to be used.

The controlling circuitry may hence in some embodiments be configured to cause the setting the sync raster points such that they indicate which detection method should be applied by the communication terminal, and cause signalling of the sync raster points.

In some embodiments, the controlling circuitry is configured to cause signalling to the network terminal to apply the second detection method, by causing at least one of:

- configuration of the transmission window with at least a length or a duration parameter;
- configuration of a message comprising the determined Q parameter for the communication terminal;
- usage of a codepoint in one or both reserved bits in a PBCH-payload to indicate use of the second detection method;
- coupling of the second detection method to a second SS/PBCH block pattern; and
- coupling of the second detection method to a second SS/PBCH BLOCK raster point group.

In some embodiments, the controlling circuitry may further comprise a configurer (CONF, or configuring module) 421.

The controlling circuitry may be configured to cause configuration of the transmission window (e.g. by causing the configure to configure) to the communication terminal.

The transmission window configuration should preferably at least include a length or a duration parameter. In addition, an offset and a periodicity may be configured. The configuration is signalled to the communication terminal as part of the system information, e.g. in SIB1 or some other SI message. In case the configuration only contains a length/duration, it may be given to the communication terminal as part of MIB. For handover and SCell addition purposes the configuration can be given using dedicated RRC signalling. In some embodiments, the configuration may be used to determine use of the first detection method as well. E.g. the length/duration is signalled as zero, the communication terminal applies the first detection method.

The length/duration typically indicates where the window ends. The starting point is fixed equal to the starting point of the half-frame in which the UE detected the SS/PBCH block(s).

The window then repeats every X ms where X is configured in ssb-PeriodicityServingCell ENUMERATED {ms5, ms10, ms20, ms40, ms80, ms160}, which is defined in Rel-15.

In some embodiments, the length parameter may indicate a slot or resource block, etc. In some embodiments, the duration parameter may indicate time in e.g. $\mu$s, ms, etc.

In some embodiments, length may have the same meaning as duration and may hence only be two different words for the same thing.

In some embodiments, the parameter Q is configured to the communication terminal. If the configuration is present, the communication terminal applies the configuration and uses the second detection method. If the configuration is not present, the communication terminal uses the first detection method.

In some embodiments, if Q is signaled as zero, the communication terminal may apply the first detection method. The configuration is signaled to the communication terminal as part of the system information, e.g. in MIB or SIB1 or some other SI message. For handover and SCell addition purposes the configuration can be given using dedicated RRC signaling. For RRM measurements Q may be signaled as part of the measurement configuration (MeasObjectNR, SIB2, SIB4). For RRCRelease with redirect info, Q is signaled as part of the CarrierInfoNR IE.

In some embodiments, Q may be signaled and/or set as a part of the window configuration.

In some deployments channel access is not a major problem and LBT failure is infrequent. In such deployments, relying on Rel-15 NR mechanism for QCL and timing determination is sufficient. One simple way of signaling this to the UE is to either let the absence of Q or e.g. the value Q=0 be indicative of that the UE should apply the Rel-15 method of QCL and timing determination. In other words, it is useful to be able to configure whether or not SS/PBCH blocks are allowed to shift in time.

Example: The absence of Q or e.g. the value Q=0 is indicative of that the UE shall apply the Rel-15 method of QCL and timing determination where SS/PBCH blocks do not shift in time.

A related discussion is provided in 3GPP TSG-RAN WG1 Meeting #98bis, R1-1910948, which disclosures are appended hereto.

In some embodiments, the choice of detection method to be used may be coupled to the frequency band. For example, if the communication terminal is operating on band n46, the second detection method is used.

In some embodiments, the apparatus 400 may be comprised in a network node. E.g. the network node as described in conjunction with any of the previous Figs 1-3.

Fig. 5 illustrates an example apparatus 500 according to some embodiments. The apparatus 500 may comprise controlling circuitry (CNTR, or a controller) 520 for causing Synchronization Signal/Physical Broadcast Channel, SS/PBCH block detection.

The controlling circuitry 520 may be configured to carry out the method 200 as described in conjunction with Fig. 2.

The controlling circuitry may further comprise a determiner (DET, or determining module) 522. The apparatus may comprise a transceiver circuit (or transceiver circuitry) (RX/TX) 510.

The controlling circuitry may be configured to cause reception of signalling from a network node associated with a communication network, the signalling indicative of a SS/PBCH block detection method (the controlling circuitry may e.g. be configured to cause the transceiver circuit to receive).

The controlling circuitry 520 may be configured to cause determination of whether the indicated SS/PBCH block detection method is a first SS/PBCH block detection method or a second SS/PBCH block detection method (e.g. by causing the determiner to determine).

The controlling circuitry may be configured to cause application of the first or the second SS/PBCH block detection method, based on the determination.

The communication network may be a new radio network. The communication network may utilize different types of Radio Access networks. The communication network may be a 2G, 3G, 4G, 5G etc. type of network.

The network node may e.g. be the network node described in conjunction with any of the previous figures 1-3.

In some embodiments the controlling circuitry may be configured to cause reception (e.g. by causing the transceiver circuit to receive), of signalling and determination (e.g. by causing the determiner to determine) of whether the indicated SS/PBCH block detection is the first or the second detection method by causing reception of a configuration of a transmission window and cause determination of whether the transmission window configuration comprises at least one of a length and duration parameter and cause application of the second SS/PBCH block detection method when it is determined that the transmission window configuration does comprise at least one of a length and duration parameter.

In some embodiments, when the configuration is present, the controlling circuitry is configured to cause application of the configuration and to cause usage of the second detection method. If the configuration is not present, the controlling circuitry is configured to cause usage of first detection method.

The transmission window configuration should preferably at least include a length or a duration parameter. In addition, the configuration may comprise an offset and a periodicity. The configuration may be signalled to the communication terminal as part of the system information, e.g. in SIB1 or some other SI message. In case the configuration only contains a length/duration, it may be signalled to the communication terminal as part of MIB. For handover and SCell addition purposes the configuration can be signalled using dedicated RRC signalling. In some embodiments, the configuration may be used to cause determination of usage of the first detection method as well. E.g., the length/duration is signalled as zero, the controlling circuitry is configured to cause application the first detection method.

The length/duration typically indicates where the window ends. The starting point is fixed equal to the starting point of the half-frame in which the UE detected the SS/PBCH block(s).

The window then repeats every X ms where X is configured in ssb-PeriodicityServingCell ENUMERATED {ms5, ms10, ms20, ms40, ms80, ms160}, which is defined in Rel-15.

In some embodiments, the length parameter may indicate a slot or resource block, etc. In some embodiments, the duration parameter may indicate time in e.g. $\mu$s, ms, etc.

In some embodiments, length may have the same meaning as duration and may hence only be two different words for the same thing.

In some embodiments, the controlling circuitry may cause reception of signalling and determination of whether the indicated SS/PBCH block detection is the first or the second detection method by causing reception of a system information, SI, message or dedicated Radio Resource Control, RRC- signalling, cause determination of whether the received signalling comprises a flag and cause application of the first SS/PBCH block detection method (step 212) when it is determined that the received signalling comprises a flag.

In some embodiments, an explicit flag (one bit) is used to indicate use of the first or second detection method. The configuration is signalled to the communication terminal as part of the system information, in MIB.

For handover and SCell addition purposes the configuration can be given using dedicated RRC signalling.

In some embodiments, causing reception of signalling (step 210) and causing determination of whether the indicated SS/PB channel block detection method is the first SS/PBCH block detection method or the second SS/PBCH BLOCK detection method may comprise causing reception of a code point in one ormore reserved bits in a Physical Broadcast Channel, PBCH, payload wherein at least one of the values 00, 01, 10 and 11 indicates the first SS/PBCH block detection method.

Using a code point in one or more reserved bits in the PBCH-payload may e.g. comprise that one codepoint of one or more of the reserved bits $\overline{a}_{\overline{A}+6}$ and $\overline{a}_{\overline{A}+7}$ in the PBCH payload is used to indicate whether the communication terminal shall use the first or the second detection method. In some embodiments, if two of the bits are used, the two bits can take on values (00, 01, 10, and 11). If e.g. the value 11 is signalled by the network node, the controlling circuitry causes usage the first detection method. If any of the other values are signalled, the controlling circuitry causes usage of the second detection method. It should be noted that the above is just an example, and any of the indicated values are available for indicating a certain method, as long as the same value is not used to indicate both the first and the second detection method.

In some embodiments, if several code points are used to indicate the second detection method, different code points can indicate different window durations to the communication terminal.

This is an effective way to provide more information to the communication terminal on where/when it may detect the SS/PBCH blocks.

Hence, the controlling circuitry may cause checking of the value of the code point in order to cause determination of which detection method to use.

In some embodiments, causing reception of signalling and causing determination of whether the indicated SS/PBCH block detection method is the first SS/PBCH block detection method or the second SS/PBCH BLOCK detection method comprises causing reception of an indication of a SS Block Pattern for reception of the SS/PBCH block, causing application the first SS/PBCH block detection method if the SS/PBCH pattern indication indicates a block pattern and causing application of the second SS/PBCH block detection method if the SS/PBCH pattern indication indicates a second block pattern.

In some embodiments, the network node may couple the choice of detection method to the SS/PBCH block pattern. For example, a new pattern F can be defined and if a frequency band uses pattern F (as specified in 3GPP 38.101-1), SS/PBCH blocks are transmitted according to the second detection method which is caused to be applied by the controlling circuitry. The network node may then signal an indication to the controlling circuitry of which block pattern is going to be used. Based on this, the controlling circuitry will have knowledge of which detection method should be caused to be applied.

In some embodiments, causing reception of signalling and determination of whether the indicated SS/PBCH block detection method is the first SS/PBCH block detection method or the second SS/PBCH block detection method comprises causing reception of an indication of one or more SS/PBCH block synchronization (sync)raster point groups and determining (compare step 211 of the method 200) whether the one or more SS/PBCH block sync raster point groups are indicative of the first or the second SS/PBCH block detection method.

In some embodiments, the choice of detection method is coupled to the SS/PBCH block sync raster points that are used. For example, the SS/PBCH block sync raster points used for a deployment where the second detection method is to be used could be different from the SS/PBCH block sync raster points that are used for a deployment where the first detection method is to be used. The controlling circuitry may be informed of this by the network node.

In some embodiments, causing reception of signalling (compare with step 210) and determination of (compare with step 211) whether the indicated SS/PBCH block detection method is the first SS/PBCH block detection method or the second SS/PBCH block detection method may comprise causing reception of signalling and causing determination of whether the signalling comprises a Q parameter, causing application of (compare with step 213) the second SS/PBCH block detection method when it's determined that the signalling comprises a Q parameter and causing application of the Q parameter to calculate a quasi-colocation of the SS/PBCH blocks.

In some embodiments, the parameter Q is configured to the controlling circuitry. If the configuration is present, the controlling circuitry applies the configuration and cause usage the second detection method (compare with method step 213). If the configuration is not present, the communication terminal cause usage the first detection method (compare with method step 212).

In some embodiments, if Q is signaled as zero, the controlling circuitry may cause application of the first detection method (compare with step 212). The configuration is signaled to the communication terminal as part of the system information, e.g. in MIB or SIB1 or some other SI message. For handover and SCell addition purposes the configuration can be signaled using dedicated RRC signaling. For RRM measurements Q may be signaled as part of the measurement configuration (MeasObjectNR, SIB2, SIB4). For RRCRelease with redirect info, Q is signaled as part of the CarrierInfoNR IE.

In some embodiments, Q may be signaled and/or set as a part of the window configuration.

In some embodiments, the apparatus 500 may be comprised in a communication terminal. The communication terminal comprising the apparatus 500 may e.g. be the communication terminal described in conjunction with any of the previous Figs 1-4.

The described embodiments and their equivalents may be realized in software or hardware or a combination thereof. They may be performed by general-purpose circuits associated with or integral to a communication terminal, such as digital signal processors (DSP), central processing units (CPU), co-processor units, field-programmable gate arrays (FPGA) or other programmable hardware, or by specialized circuits such as for example application-specific integrated circuits (ASIC). All such forms are contemplated to be within the scope of this disclosure.

Embodiments may appear within an electronic apparatus (such as a wireless communication device) comprising circuitry/logic or performing methods according to any of the embodiments. The electronic apparatus may, for example, be a portable or handheld mobile radio communication equipment, a mobile radio terminal, a mobile telephone, a base station, a base station controller, a pager, a communicator, an electronic organizer, a smartphone, a computer, a notebook, a USB-stick, a plug-in card, an embedded drive, or a mobile gaming device.

According to some embodiments, a computer program product comprises a computer readable medium such as, for example, a diskette or a CD-ROM. The computer readable medium may have stored thereon a computer program comprising program instructions. The computer program may be loadable into a data-processing unit, which may, for example, be comprised in a mobile terminal. When loaded into the data-processing unit, the computer program may be stored in a memory associated with or integral to the data-processing unit. According to some embodiments, the computer program may, when loaded into and run by the data-processing unit, cause the data-processing unit to execute method steps according to some embodiments disclosed herein.

Reference has been made herein to various embodiments. However, a person skilled in the art would recognize numerous variations to the described embodiments that would still fall within the scope of the embodiments. For example, the method embodiments described herein describes example methods through method steps being performed in a certain order. However, it is recognized that these sequences of events may take place in another order without departing from the scope of the embodiments. Furthermore, some method steps may be performed in parallel even though they have been described as being performed in sequence.

In the same manner, it should be noted that in the description of embodiments, the partition of functional blocks into particular units is by no means limiting. Contrarily, these partitions are merely examples. Functional blocks described herein as one unit may be split into two or more units. In the same manner, functional blocks that are described herein as being implemented as two or more units may be implemented as a single unit without departing from the scope of the embodiments.

Any feature of any of the embodiments disclosed herein may be applied to any other embodiment, wherever suitable. Likewise, any advantage of any of the embodiments may apply to any other embodiments, and vice versa. Hence, it should be understood that the details of the described embodiments are merely for illustrative purpose and by no means limiting. Instead, all variations that fall within the range of the claims are intended to be embraced therein.

ABBREVIATIONS

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| 3GPP | 3rd Generation Partnership Project |
| 5G | 5th Generation |
| BCCH | Broadcast Control Channel |
| BCH | Broadcast Channel |
| CA | Carrier Aggregation |
| CC | Carrier Component |
| CCCH SDU | Common Control Channel SDU |
| CDMA | Code Division Multiplexing Access |
| CGI | Cell Global Identifier |
| CIR | Channel Impulse Response |
| CPICH | Common Pilot Channel |
| CQI | Channel Quality information |
| CSI | Channel State Information |
| DCCH | Dedicated Control Channel |
| DL | Downlink |
| DM | Demodulation |
| DMRS | Demodulation Reference Signal |
| DRX | Discontinuous Reception |
| DTX | Discontinuous Transmission |
| DTCH | Dedicated Traffic Channel |
| eNB | E-UTRAN NodeB |
| ePDCCH | enhanced Physical Downlink Control Channel |
| E-SMLC | evolved Serving Mobile Location Center |
| E-UTRA | Evolved UTRA |
| E-UTRAN | Evolved UTRAN |
| FDD | Frequency Division Duplex |
| GERAN | GSM EDGE Radio Access Network |
| gNB | Base station in NR |
| GNSS | Global Navigation Satellite System |
| GSM | Global System for Mobile communication |
| HARQ | Hybrid Automatic Repeat Request |

| | |
|---|---|
| HO | Handover |
| HSPA | High Speed Packet Access |
| HRPD | High Rate Packet Data |
| LOS | Line of Sight |
| LPP | LTE Positioning Protocol |
| LTE | Long-Term Evolution |
| MAC | Medium Access Control |
| MBMS | Multimedia Broadcast Multicast Services |
| MBSFN | Multimedia Broadcast multicast service Single Frequency Network |
| MBSFN ABS | MBSFN Almost Blank Subframe |
| MDT | Minimization of Drive Tests |
| MIB | Master Information Block |
| MME | Mobility Management Entity |
| MSC | Mobile Switching Center |
| NPDCCH | Narrowband Physical Downlink Control Channel |
| NR | New Radio |
| OCNG | OFDMA Channel Noise Generator |
| OFDM | Orthogonal Frequency Division Multiplexing |
| OFDMA | Orthogonal Frequency Division Multiple Access |
| OSS | Operations Support System |
| OTDOA | Observed Time Difference of Arrival |
| O&M | Operation and Maintenance |
| PBCH | Physical Broadcast Channel |
| P-CCPCH | Primary Common Control Physical Channel |
| PCell | Primary Cell |
| PCFICH | Physical Control Format Indicator Channel |
| PDCCH | Physical Downlink Control Channel |
| PDP | Profile Delay Profile |
| PDSCH | Physical Downlink Shared Channel |
| PGW | Packet Gateway |
| PHICH | Physical Hybrid-ARQ Indicator Channel |
| PLMN | Public Land Mobile Network |
| PMI | Precoder Matrix Indicator |
| PRACH | Physical Random Access Channel |
| PRS | Positioning Reference Signal |
| PSS | Primary Synchronization Signal |
| PUCCH | Physical Uplink Control Channel |
| PUSCH | Physical Uplink Shared Channel |
| RACH | Random Access Channel |
| QAM | Quadrature Amplitude Modulation |
| RAN | Radio Access Network |
| RAT | Radio Access Technology |
| RLM | Radio Link Management |
| RNC | Radio Network Controller |
| RNTI | Radio Network Temporary Identifier |
| RRC | Radio Resource Control |
| RRM | Radio Resource Management |
| RS | Reference Signal |
| RSCP | Received Signal Code Power |
| RSRP | Reference Symbol Received Power OR Reference Signal Received Power |
| RSRQ | Reference Signal Received Quality OR Reference Symbol Received Quality |
| RSSI | Received Signal Strength Indicator |
| RSTD | Reference Signal Time Difference |
| SCH | Synchronization Channel |
| SCell | Secondary Cell |
| SDU | Service Data Unit |
| SFN | System Frame Number |
| SGW | Serving Gateway |

| SI | System Information |
|---|---|
| SIB | System Information Block |
| SNR | Signal to Noise Ratio |
| SON | Self Optimized Network |
| SS | Synchronization Signal |
| SSS | Secondary Synchronization Signal |
| TDD | Time Division Duplex |
| TDOA | Time Difference of Arrival |
| TOA | Time of Arrival |
| TSS | Tertiary Synchronization Signal |
| TTI | Transmission Time Interval |
| UE | User Equipment |
| UL | Uplink |
| UMTS | Universal Mobile Telecommunication System |
| USIM | Universal Subscriber Identity Module |
| UTDOA | Uplink Time Difference of Arrival |
| UTRA | Universal Terrestrial Radio Access |
| UTRAN | Universal Terrestrial Radio Access Network |
| WCDMA | Wide CDMA |
| WLAN | Wide Local Area Network |

A disclosure is here presented from 3GPP TSG-RAN WG1 Meeting #98bis, R1-1910948, Chongqing, China, October 14th - 20th, 2019, for agenda Item 7.2.2.2.2 by Ericsson with title "Enhancements to initial access procedure" as a document for discussion/decision:

**Introduction**

In this contribution we discuss further details on procedures for initial access, RRM measurements and radio link monitoring. In [2] the following items were identified as essential:

**Essential**

- Timing recovery from SSB
- Cross SSB QCL relationship by Q and A: Which A, how to indicate or determine Q, range of Q, how to determine Q for RRM
- Type0-PDCCH monitoring
- RLM enhancement: IS and OOS

The mechanisms for "timing recovery from SSB" was agreed in RAN1#98:

<u>Conclusion:</u>

The maximum number of PBCH DMRS sequences used in a cell is unchanged from Rel-15 (=8).

- The number of PBCH DMRS sequences used in a cell is independent of Q.

Agreement:

The 3 LSB bits of the SSB candidate position index are represented by the PBCH DMRS sequence index.

Agreement:

The following bits of the PBCH payload (not MIB) are used for serving cell timing determination within a frame in addition to the PBCH DMRS sequence index as agreed earlier:

- $\overline{a}_{\overline{A}+7}$ for 15 kHz SCS, and $\overline{a}_{\overline{A}+6}$ and $\overline{a}_{\overline{A}+7}$ for 30 kHz SCS

- $\overline{a}_{\overline{A}+4}$ (the half-frame bit as in Rel-15)

**1 QCL determination**

In RAN1#98 the following agreements regarding QCL determination was made:

Agreement:

For a cell (either serving or a neighbour cell), UE may assume a QCL relation between SS/PBCH blocks within or across DRS transmission or measurement windows that have the same value of modulo(A, Q), once Q is known to the UE

- A is the PBCH DMRS sequence index.
- Note: This agreement extends a prior agreement for serving cells on QCL relation between SS/PBCH blocks to neighbour cells

Agreement:

For purposes of SSB QCL derivation, the following values of Q are supported: {1, 2, 4, 8}.

- FFS: Further down-selection of allowed values.

Agreement:

If Q is known, candidate monitoring slots for Type0 PDCCH search space are the PDCCH monitoring slots associated with SS/PBCH blocks that are QCL with the SS/PBCH block from which the UE determines that a CORESET for Type0-PDCCH CSS set is present

- Note: Q may be always known depending on where Q is signalled. This aspect is to be discussed further.

**1.1 Signaling of Q**

One topic that remains is how Q is signaled to the UE. In this section we go through different scenarios and list how Q can be signaled to the UE. In general, we split the discussion in serving cell and neighbor cell cases.

**Serving cell (initial access)**

The initial access procedure in principle consists of the three steps:

1. Cell search with frame timing determination

2. Reading of SIB1 (including RACH configuration)

3. Random access

Because the number of PBCH DM-RS sequences are fixed (to 8) as in Rel-15, the UE can determine the frame timing without knowledge of Q.
To read SIB1 the UE needs to monitor PDCCH in the Type0-PDCCH CSS. The location of the Type0-PDCCH CSS in relation to an SS/PBCH block is signaled in MIB. In RAN1#98 it was agreed that if Q is known, candidate monitoring slots for Type0 PDCCH search space are the PDCCH monitoring slots associated with SS/PBCH blocks that are QCL with the SS/PBCH block from which the UE determines that a CORESET for Type0-PDCCH CSS set is present. This means that for Type0-PDCCH CSS monitoring, the UE can restrict its monitoring to a subset of the monitoring occasions. If Q is not known, the UE needs to monitor every monitoring occasion.
Thus, also for this step, knowledge of Q is not required, even if we recognize that some optimizations with regards to Type0-PDCCH CSS monitoring could be possible if Q would have been known to the UE at this stage. Note that for most cases when the UE monitors Type0-PDCCH CSS, Q is known through other means (see discussion below), thus any optimization would not help reduce battery drain by any significant amount.
In the next step the UE maps the detected SS/PBCH block to a RACH resource/preamble. For this step Q is needed, since the mapping must be based on the beam index determined as the detected PBCH DMRS sequence index modulo Q.

Because Q is strictly only needed after SIB1 has been read, , we propose to signal Q in SIB1 in *ServingCell-ConfigCommonSIB.* Note that as we will see in the upcoming sections, there are many cases where the UE monitors Type0-PDCCH and Q is in fact known by other means. Hence, there seems to be little motivation to signal Q via MIB as proposed by some companies. Introducing a new MIB for NR-U just to cover the corner case of SIB1 reading for the first time does not seem well-motivated.

**Proposal 1 Support signaling of Q for the serving cell in SIB1 *(ServingCellConfigCommonSIB).***

**Serving cell (dedicated signaling)**

In many cases a serving cell is added using dedicated signaling, e.g. when configuring a UE with SCells or with an additional cell group (SCG) or for SpCells (MCG and SCG) upon reconfiguration with sync. For those cases *Serving-CellConfigCommon* is used to configure cell specific parameters of a UE's serving cell and thus Q should be included there as well.

**Proposal 2 Support dedicated signaling of Q for a serving cell in *ServingCellConfigCommon***

**Neighbor cells**

Neighbor cell measurements in NR are configured per frequency using the IEs *intraFreqCellReselectionInfo* (SIB2), *InterFreqCarrierFreqinfo* (SIB4) and *MeasObjectNR* (dedicated RRC signaling). In addition, cell specific parameters can be included in *IntraFreqNeighCellinfo* (SIB3), *InterFreqNeighCellinfo* (SIB4) and *CellsToAddMod* (dedicated RRC signaling).

To allow different values of Q for different neighbor cells on a frequency, cell specific lists with Q values can be introduced. However, for most cases we don't think that such a detailed and flexible configuration is well-motivated. To allow a light weight configuration option we propose that the maximum value used by any cell is configured per frequency. Cells using a smaller Q then have to (if cell specific parameters are not signaled) restrict which SS/PBCH block candidate positions that they use and thus adapt their SS/PBCH block starting point granularity according to the signaled maximum Q.

**Proposal 3 For RRM measurements (IDLE/INACTIVE/CONNECTED) support signaling one common Q per frequency (SIB2/SIB4/MeasObjectNR).**

To illustrate the concept of signaling a common maximum Q, consider an example with three neighbor cells on a frequency that utilize different values of Q. Cell 1 uses Q=4, cell 2 uses Q=2 and cell 3 uses Q=1. Because Q=4 is the largest value among the cells, that is signaled to the UE in the corresponding RRC message. To maintain the property that "UE may assume a QCL relation between SS/PBCH blocks which are detected across DRS transmission windows and have the same value of modulo(PBCH DMRS sequence index, Q), once Q is known to the UE", cells 2 and 3 need to restrict in which SS/PBCH block candidate positions they transmit SS/PBCH blocks. This is illustrated with the solid underscore in the table below.

| | | 0 | 1 | 2 | 3 | 4 | 5 | 6 | 7 | 8 | 9 | 10 | 11 | 12 | 13 | 14 | 15 | 16 | 17 | 18 | 19 | SS/PBCH block candidate position |
|---|---|---|---|---|---|---|---|---|---|---|---|---|---|---|---|---|---|---|---|---|---|---|
| Cell 1 | Q=4 | 0 | 1 | 2 | 3 | 0 | 1 | 2 | 3 | 0 | 1 | 2 | 3 | 0 | 1 | 2 | 3 | 0 | 1 | 2 | 3 | mod(SS/PBCH block candidate position,4) |
| Cell 2 | Q=2 | 0 | 1 | 0 | 1 | 0 | 1 | 0 | 1 | 0 | 1 | 0 | 1 | 0 | 1 | 0 | 1 | 0 | 1 | 0 | 1 | mod(SS/PBCH block candidate position,2) |
| Cell 3 | Q=1 | 0 | 0 | 0 | 0 | 0 | 0 | 0 | 0 | 0 | 0 | 0 | 0 | 0 | 0 | 0 | 0 | 0 | 0 | 0 | 0 | mod(SS/PBCH block candidate position,1) |

X Valid SS/PBCH block candidate position

X Signaled value of Q

In case further flexibility is deemed essential, cell specific values of Q can be introduced to override the frequency common value, preferably extending the cell specific IEs where possible *(CellsToAddMod* seems not be extendable).

**Observation 1 In case further flexibility is deemed essential cell specific values of Q can be introduced (SIB3/ SIB4/MeasObjectNR) to override the frequency common value.**

Given the discussion above, for the vast majority of uses cases when the UE is required to monitor Type0-PDCCH CSS, Q is in fact known to the UE. This also includes SIB1 reading for cell re-selection (Q signaled in SIB2/4). In addition, for monitoring of e.g. Type0A-PDCCH CSS (other system information) and Type2-PDCCH CSS (paging) when serachSpaceID=0 in *PDCCH-ConfigCommon* (and the UE thus determines the monitoring occasions as described in Subclause 13 of 38.213) Q is known (from reading SIB or through dedicated signaling). Only for example in the case of initial cell selection when no information is available, Q is not known and thus the UE needs to monitor every monitoring occasion. In our view, the additional monitoring effort for this case does not motivate fundamental changes to Rel-15 such as modifying or reinterpreting MIB content.

**Observation 2 For the vast majority of uses cases when the UE is required to monitor Type0-PDCCH CSS, Q is known, and thus signaling Q in MIB is not motivated.**

In some deployments channel access is not a major problem and LBT failure is infrequent. In such deployments, relying on Rel-15 NR mechanism for QCL and timing determination is sufficient. One simple way of signaling this to the UE is to either let the absence of Q or e.g. the value Q=0 be indicative of that the UE should apply the Rel-15 method of QCL and timing determination. In other words, it is useful to be able to configure whether or not SS/PBCH blocks are allowed to shift in time.

**Proposal 4 The absence of Q or e.g. the value Q=0 is indicative of that the UE shall apply the Rel-15 method of QCL and timing determination where SS/PBCH blocks do not shift in time.**

### 1.2 Down-selection of Q

In Section 1.1 we have outlined efficient ways of signaling Q to the UE. In our view, for almost all cases, Q can be signaled to the UE with small specification impact. The case of SIB1 reading when Q is not known to the UE can be handled as a special case (see Section 1.3). Down-selecting Q further unnecessarily limits deployment options or the number of starting points for SSB transmissions. Thus, we make the following proposal to resolve the FSS from RAN1#98:

**Proposal 5 No further down-selection if Q is necessary, i.e. support Q = {1,2,4,8}.**

### 1.3 Type0-PDCCH monitoring

In RAN1#98, the following agreement on Type0-PDCCH monitoring was made:

Agreement:

If Q is known, candidate monitoring slots for Type0 PDCCH search space are the PDCCH monitoring slots associated with SS/PBCH blocks that are QCL with the SS/PBCH block from which the UE determines that a CORESET for Type0-PDCCH CSS set is present

- Note: Q may be always known depending on where Q is signalled. This aspect is to be discussed further.

Looking at 38.213 and how this agreement would be embodied, our understanding is that the following text would be affected:
For the SS/PBCH block and CORESET multiplexing pattern 1, a UE monitors PDCCH in the Type0-PDCCH CSS set over two consecutive slots starting from slot $n_0$. For SS/PBCH block with index $i$, the UE determines an index of slot $n_0$ as

$$n_0 = \left( O \cdot 2^\mu + \lfloor i \cdot M \rfloor \right) \bmod N_{slot}^{frame,\mu}$$ located in a frame with system frame number (SFN) $SFN_C$ satisfying $SFN_C \bmod 2 = 0$

if $\left\lfloor \left( O \cdot 2^\mu + \lfloor i \cdot M \rfloor \right) / N_{slot}^{frame,\mu} \right\rfloor \bmod 2 = 0$ or in a frame with SFN satisfying $SFN_C \bmod 2 = 1$ if

$\left\lfloor \left( O \cdot 2^\mu + \lfloor i \cdot M \rfloor \right) / N_{slot}^{frame,\mu} \right\rfloor \bmod 2 = 1$. M and O are provided by Tables 13-11 and 13-12, and $\mu \in \{0,1,2,3\}$ based on the SCS for PDCCH receptions in the CORESET [4, TS 38.211]. The index for the first symbol of the CORESET in slots $n_0$ and $n_0 + 1$ is the first symbol index provided by Tables 13-11 and 13-12.
The text then needs to be interpreted so that for SS/PBCH with index i the slot index is determined based on indices that are QCL'ed with index i and not only i.
As discussed in Section 1.1, Q is known to the UE except for the case of initial cell selection. For that case the UE should monitor every Type0 PDCCH CSS monitoring occasion in the DRS transmission window. We point out that such a case is a rare event, and further optimization of monitoring behavior is not warranted as it is not expected to reduce UE battery drain in a significant way.

**Proposal 6 If Q is not known, candidate monitoring slots for Type0 PDCCH search space are all PDCCH monitoring slots in the DRS transmission window.**

Note that for other type of PDCCH CSS monitoring, e.g. Type0A (other system information), Type1 (random access response) and Type2 (paging), Q is known to the UE because such monitoring occurs after reading SIB1 for the initial cell selection case.

### 2 DRS transmission window

In RAN1#96bis, the following agreement was made with respect to the DRS transmission: Agreement:

The maximum DRS transmission window duration is 5 ms.

- The maximum number of candidate SSB positions within a DRS transmission window, Y, is selected as Y = 10 for 15 kHz SCS and Y = 20 for 30 kHz SCS.

o Note: The number of starting points for DRS transmissions with the 5 ms window that can use a Cat. 2 LBT is to be discussed further as part of channel access discussions.

- FFS: If the DRS transmission window is configurable, and if yes, how to configure and indicate the window, including the range of configurable values.

### 2.1 UL Transmissions in DRS Transmission Window

In the DRS transmission window, the UE can expect (pending LBT outcome) the DRS to be transmitted. To avoid the gNB and UE competing for transmission resources in this window, it is judged valuable to restrict unscheduled UE transmissions in this window, such as e.g. PRACH, SR, and CG transmissions. Such transmissions are given pre-configured transmission opportunities hence it might be difficult to avoid configuration in the DRS transmission window. Rather than modifying the configuration of such signals, it is proposed to specify new behavior such that the UE would simply avoid autonomous transmissions in the DRS transmission window. Hence, we propose the following

**Proposal 7 Support UE behavior to suppress PRACH, SR, and CG transmissions within the DRS transmission window. FFS: Optimizations such as allowing transmissions in slots not containing SS/PBCH, based on UE detecting one or more successful SS/PBCH block transmissions within the window.**

Going into a bit more detail, we observe that for PRACH also IDLE/INACTIVE UEs' transmissions need to be suppressed. Because there are very limited signaling options for IDLE/INACTIVE UEs, we propose that for PRACH, a static rule invalidating PRACH occasions in the DRS transmission window is added to 38.213.

**Proposal 8 Any PRACH occasion that overlaps with the DRS transmission window shall be considered invalid.**

For RRC configured UL resources (apart from PRACH) 38.213 §11.1 specifies several rules controlling UE behavior. Here we focus on the case where there is no static UL/DL configuration configured by RRC (that we consider being most useful for operation in unlicensed spectrum). For this case the gNB can use DCI format 2_0 to indicate a symbol as DL/UL/F. In general, for the case when monitoring of DCI format 2_0 is configured, the UE transmits in its RRC configured UL resources only if a symbol is indicated as UL using DCI format 2_0. There are however a few cases where the UE doesn't have enough time to determine if DCI format 2_0 was indicating symbols as UL or not or it did not detect DCI format 2_0. For those cases, the UE is allowed to transmit in its RRC configured UL resources if they fall within the PUSCH preparation time $T_{\text{proc,2}}$ from the last symbol of the CORESET where the UE monitors/received DCI format 2_0.

This behavior will allow the UE (in the cases above) to compete with the gNB for channel access in the DRS transmission window. To prevent this, it is preferable if the UE behavior is inversed for RRC configured UL resources that fall within the cancelation time. That is, the UE is not allowed to transmit in its RRC configured UL resources if they fall within the PUSCH preparation time if it overlaps with the DRS transmission window. Or phrased differently, for RRC configured UL resources overlapping with the DRS transmission window, the UE can only perform UL transmissions in symbols known to the UE as being indicated as uplink by DCI_2_0. For symbols where the state (DL/UL/F) is unknown, i.e. symbols within PUSCH preparation time, the UE does not transmit.

**Proposal 9 For RRC configured UL resources overlapping with the DRS transmission window, the UE can only perform UL transmissions in symbols known to the UE as being indicated as uplink by DCI_2_0.**

Note that scheduled (using DCI) UL transmissions will still follow the same rules as in Rel-15. Also note that suppression of PRACH, SR and CG transmissions in the DRS transmission window further motivates having the duration of the window configurable. This is further discussed in Section 2.2 below.

### 2.2 Configuration of the DRS transmission window

We note that in NR Rel-15 there is no notion of a DRS transmission window. It was not necessary to define one, since in licensed operation the SS/PBCH blocks are transmitted at fixed locations in time; they do not shift within a DRS window due to LBT as in for unlicensed operation. In NR Rel-15, the information that is signaled with respect to the serving cell is the candidate positions of the SS/PBCH block transmissions and the SS/PBCH block burst periodicity given by the parameters *ssb-PositionsInBurst* and by *ssb-PeriodicityServingCell,* respectively. These are signaled either in SIB1 within the IE *ServingCellConfigCommonSIB* or by dedicated signaling within the IE *ServingCellConfigCommon.*

One of the main motivations for having the duration of the DRS transmission window configurable is that if the suppression of PRACH, SR and CG in the DRS transmission window is agreed (as discussed in Section 2.1), it is important for the UE to know if the gNB intends to attempt DRS transmission in the full window or not. For example, in deployments where LBT failures are rare, using the full 5 ms window might not be needed. In addition, if the UE is aware of the duration of the DRS transmission window, it can stop monitoring for SSBs for RLM and serving cell RRM measurements before the end of the full 5 ms window. This can allow the UE to save power, especially in IDLE mode where serving cell RRM measurements need to be performed.

In order to define a DRS transmission window for unlicensed operation, the enhancement that is needed on top of *ssb-PositionsInBurst* and by *ssb-PeriodicityServingCell* is the duration of the window. Since the first candidate position of the DRS transmission window is agreed to be located in the first half slot of a half frame, there is no need to configure an offset. One option for configuration of the duration is to reuse the *SSB-MTC* information element since it includes a duration field; however, the offset field is unnecessary, and the periodicity field is redundant since the SS/PBCH block burst is configured already with *ssb-PeriodicityServingCell*. Hence it makes more sense to add a separate duration field along with the configuration of the existing serving cell related parameters *ssb-PositionsInBurst* and *ssb-PeriodicityServingCell*.

**Proposal 10 Support explicit configuration of the DRS transmission window duration associated with the serving cell parameters *ssb-PositionsInBurst* and *ssb-PeriodicityServingCell*.**

**Observation 3 The DRS transmission window duration can be added to *ServingCellConfigCommonSIB* and *ServingCellConfigCommon*. For SCell, the window duration can be added to *SCellConfig*.**

**2.3 Rate Matching Mechanisms for Reception of PDSCH**

In this section we discuss rate matching mechanisms for SS/PBCH Block(s) for reception of PDSCH in the DRS transmission window.

In Rel-15 NR when receiving the PDSCH scheduled with SI-RNTI and the system information indicator in DCI is set to 1, RA-RNTI, P-RNTI or TC-RNTI, the UE assumes SS/PBCH block transmission according to *ssb-PositionsInBurst* and if the PDSCH resource allocation overlaps with PRBs containing SS/PBCH block transmission resources the UE shall assume that the PRBs containing SS/PBCH block transmission resources are not available for PDSCH in the OFDM symbols where SS/PBCH block is transmitted. When receiving PDSCH scheduled by PDCCH with CRC scrambled by C-RNTI, MCS-C-RNTI, CS-RNTI, or PDSCH with SPS, the REs corresponding to the configured or dynamically indicated resources in Subclauses 5.1.4.1, 5.1.4.2 of 38.214 are not available for PDSCH. Furthermore, the UE assumes SS/PBCH block transmission according to *ssb-PositionsInBurst* if the PDSCH resource allocation overlaps with PRBs containing SS/PBCH block transmission resources, the UE shall assume that the PRBs containing SS/PBCH block transmission resources are not available for PDSCH in the OFDM symbols where SS/PBCH block is transmitted.

Thus, to summarize in Rel-15 NR a UE uses a combination of *ssb-PositionsInBurst* and configured or dynamically indicated resources for determining which resources that are not available for PDSCH due to SS/PBCH transmissions.

When the SS/PBCH Block(s) are allowed to shift in time in a window, relying only on *ssb-PositionsInBurst* is not sufficient. Instead we observe that the mechanism of dynamically indicating resources not available for PDSCH (DCI-based signaling of reserved resources) can be used as a rate matching mechanism for SS/PBCH Block(s) in the DRS transmission window. The Rel-15 mechanisms (configured in *RateMatchPattern*) are already very flexible with RB and symbol level bitmaps (*resourceBlocks* and *symbolsInResourceBlock*). In addition, *periodicityAndPattern* provides the possibility to configure a slot level repeating pattern, covering the DRS transmission window and slots in between.

**Observation 4 The Rel-15 mechanism of dynamically indicating resources not available for PDSCH can be used as a rate matching mechanism for SS/PBCH Block(s) in the DRS transmission window.**

Next turning back to the *ssb-PositionsInBurst* IE. Even if the SS/PBCH Block(s) can shift in a window, *ssb-PositionsInBurst* can still provide useful information to the UE. Thus, we propose to configure *ssb-PositionsInBurst* as in Rel-15 NR, i.e. assuming no shift of the SS/PBCH Block(s). E.g. for a DRS with one SS/PBCH Block in the first SS/PBCH Block position *ssb-PositionsInBurst* would be configured as 10000000.

**Observation 5 The *ssb-PositionsinBurst* IE can be configured as in Rel-15 NR, i.e. assuming no shift of the SS/PBCH Block(s).**

It should be noted that in many cases rate matching PDSCH around SS/PBCH Block(s) are not possible anyway due to that resources in the DRS are used to transmit e.g. SIB1. Thus, in general we think that optimizations on top of what is supported in Rel-15 NR in this area are not needed.

**3 Random access**

Support for RACH is relevant not only for the NR-U stand-alone scenario, but also for interworking (dual-connectivity) scenarios such as EN-DC.

In NR Rel-15, a mapping between transmitted SS/PBCH block(s) and a combination of ranges of preambles and random-access occasions (RO) is configured using *ssb-perRACH-OccasionAndCBPreamblesPerSSB.* This mapping is used for the UE to implicitly indicate to the gNB which SS/PBCH block that had the best reception conditions.

Fixed time relations between different signals/channels where LBT between the signals is required should not be assumed. If the mapping of SS/PBCH block index is done so that the UE indicates the best SS/PBCH block by transmitting Msg1 in a specific time domain RO it might happen that the UE cannot access the channel for that specific time occasion, thus it would have to delay Msg1 to the next matching time occasion. This would introduce unnecessary delays in the RACH procedure. Thus, it is beneficial if the mapping between transmitted SS/PBCH blocks and RO is done so that the best SS/PBCH block is not indicated by which time occasion the UE transmits Msg1 in, but rather by used frequency resource and/or preamble.

This can be achieved already in NR Rel-15 using appropriate configuration of *ssb-perRACH-OccasionAndCB-PreamblesPerSSB* and msg1-FDM. For example, if 4 SS/PBCH blocks are transmitted, setting msg1-FDM equal to 4 and *ssb-perRACH-Occasion* to 1 or msg1-FDM equal to 2 and *ssb-perRACH-Occasion* to 2 will achieve time-independent mapping. Where the former would allow a maximum of 64 contention-based preambles per SS/PBCH block and the latter 32. Note that this assumes that the UE uses the beam index (as defined in Section 2.1) in the selection of PRACH occasion for preamble transmission.

**Observation 6 Rel-15 NR already supports configurations so that the mapping of transmitted SS/PBCH blocks to RACH occasions is robust to LBT failures.**

According to the NR-U TR Section 7.2.1.3.2, several potential RACH enhancements beyond the functionality supported in Rel-15 have been identified for further study:

For potential RACH resource enhancements, the following options have been identified for NR-U, beyond the flexibility already available in Rel-15, but consensus was not achieved. These options may be further considered when specifications are developed:

- **Frequency-domain enhancement:** Multiple PRACH resources across multiple LBT subbands/carriers for both contention-free and contention-based RA
- **Time-domain enhancements:**

  - For connected mode UE, scheduling of PRACH resources via DCI.

    - Triggered PRACH within gNB acquired COT can use a new resource indicated by the DCI
    - For idle mode UE, scheduling of PRACH resources via paging

      - Note: potential inefficiency in network resource due to paging across multiple cells

    - Additional, new RACH resources are used immediately following detection of DRS transmission
    - Multiple PRACH transmissions before Msg2 reception in RAR window for initial access

      - Number of allowed transmissions is pre-defined or indicated, e.g., in RMSI

    - Group wise SSB-to-RO mapping by frequency first-time second manner, where grouping is in time domain

Based on the guidance provided by RAN on essential functionality for NR-U [2], the greyed-out items in the above list have been down-prioritized, hence we do not consider them here.

Out of the remaining items, the first listed enhancement is scheduling of PRACH resources via DCI. This is, however, a potential latency optimization, and our view is that it is not critical for Rel-16. It can instead be considered for a later release in a backwards-compatible manner.

**Observation 7 Scheduling of PRACH resources via DCI is an optimization and is not critical for the first release of NR-U. It can be considered for a later release in a backwards-compatible manner.**

**Proposal 11 Scheduling of PRACH resources via DCI should not be supported in Rel-16.**

The third remaining enhancement is group wise SSB-to-RO mapping by frequency first-time second manner, where grouping is in time domain. The motivation is to provide multiple transmit opportunities in time domain for a PRACH transmission. However, multiple PRACH transmit opportunities can be obtained already in Rel-15 based on cyclic repetition of the SSB-to-RO mapping. See example and further discussion above in conjunction with Observation 6.

**Observation 8 Mappings similar to group-wise SSB-to-RO mapping is already supported in NR Rel-15.**

**3.1 Msg3 transmission and RAR**

Multiple Msg TX opportunities with a single or multiple RARs in the time domain has been discussed both in RAN1 and RAN2. However, in RAN#84 this was listed as an optimization [2]:

**Observation 9 Multiple Msg3 TX opportunities with a single or multiple RARs in the time domain was deprioritized in RAN#84.**

In addition, in RAN1#97 the following agreement which facilitates gNB channel occupancy sharing with a UE for Msg3 was made and an LS response was sent to RAN2:

Agreement:

LBT category for msg 3 initial transmission is provided to the UE in RAR

The LS response triggered some discussion in RAN2 regarding the details on how the LBT category is provided in the RAR. Especially the issue of if the size of the RAR will change when including the LBT category was discussed.

In our companion paper [8] we discuss that is better to have a generic signaling solution which is applicable to cases where uplink control signaling is triggered within a DL COT. Therefore, DL DCI should also include LBT type field that corresponds to the triggered UL transmission. In [8] the following proposal is made which is repeated here:

**Proposal 12 The LBT type corresponding to the UL control signal is signaled in the DCI triggering the UL control signal transmission. LBT type field is included in:**

- DCI format 1_0 scrambled with RA-RNTI carrying the DL assignments for reception of the RAR messages (Msg2). The LBT type is applicable to Msg 3 transmission
- DCI format 1_0 and 1_1 scrambled with C-RNTI carrying the DL assignments. The LBT type is applicable to the UL control signal transmission triggered by the DCI.

Proposal 13 Inform RAN2 that the LBT category for msg 3 transmission is provided to the UE in the DCI carrying DL assignments for the RAR messages and that no further action is required by RAN2 on this matter.

**4 RRM and RLM**

**4.1 RSSI and Channel Occupancy reporting**

During the SI phase it was agreed to support RSSI reporting and define a metric to measure channel occupancy or medium contention and its corresponding reporting. To that end we start by revisiting the RSSI and channel occupancy procedure in Rel-13 LAA. In Rel-13 LAA the UE performs RSSI measurements using an RMTC configuration

```
RMTC-Config-r13 ::=     CHOICE {

    release
            NULL,

    setup
            SEQUENCE {

            rmtc-Period-r13
            ENUMERATED {ms40, ms80, ms160, ms320, ms640},

            rmtc-SubframeOffset-r13                              INTEGER(0..639)
                                        OPTIONAL,           -- Need ON


            measDuration-r13
            ENUMERATED {sym1, sym14, sym28, sym42, sym70},

            ...

    }
}
```

In addition, the UE can be configured with a channel occupancy threshold given by an RSSI value

```
MeasRSSI-ReportConfig-r13 ::=        SEQUENCE {

    channelOccupancyThreshold-r13                              RSSI-Range-r13
                                        OPTIONAL   -- Need OR

}
```

Based on these configurations, the UE periodically reports the following

```
MeasResultForRSSI-r13 ::=                                     SEQUENCE {

    rssi-Result-r13
            RSSI-Range-r13,

    channelOccupancy-r13
            INTEGER (0..100),

    ...

}
```

where the RSSI result is the average RSSI within the reporting period (ranging from 120 ms to 60 minutes) and channel occupancy is the rounded percentage of samples (OFDM symbols) which are above the channel occupancy threshold during the reporting period.

In RAN1#96, the following was agreed

Agreement:

- At least the functionalities of Rel-13 LTE-LAA RSSI and channel occupancy reporting as a baseline should be supported
- FFS:

   ○ Enhanced RSSI metrics, for e.g., sub-band-level interference measurements in a wideband operation scenario
   ○ Reporting of a new medium contention/load metric other than channel occupancy
   ○ Any modification of the parameters of the Rel-15 SMTC for operation in unlicensed spectrum

In addition, the NR_CLI_RIM WI has agreed on a RSSI measurement reporting referred to as CLI-RSSI [3][4]. In our view any mechanism agreed for NR-U should be done based on the already agreed framework for CLI-RSSI and thus agreed as additions and not new mechanisms.

**Proposal 14 RSSI and channel occupancy measurement reporting should be specified as additions to the already agreed framework for CLI-RSSI measurement reporting.**

In Rel-13 the RSSI measurement bandwidth is not well-defined which results in unpredictable and inconsistent results in case an allowed measurement bandwidth greater than 6 RB is configured by the *AllowedMeasBandwidth* IE. This was also recognized in RAN4#92 and an LS was sent to RAN1 pointing out this problem and requesting that it is resolved in Rel-16 [6]. Thus, for Rel-16, we instead propose to make the RSSI measurement bandwidth configurable. According to our understanding this is already agreed for the CLI-RSSI [3]:

> ➢ Agreement on measurement resource for RSSI measurement

- For measurement resource for RSSI measurement is configured by Symbol-level indication (e.g. starting OS and ending OS) and PRB level indication (e.g., starting PRB and ending PRB) within downlink active BWP

**Observation 10 A configurable bandwidth for RSSI is already agreed for CLI-RSSI and can thus be used also for NR-U.**

In the Rel-13 RMTC configuration the measurement duration is given in units of symbols (1, 14, 28, 42 and 70 symbols). For Rel-13 this is fine, because there is only one subcarrier spacing and thus the duration is well defined. For Rel-16 we propose to in addition to the duration measured in symbols also configure a reference sub-carrier spacing so the duration (in symbols) can be converted to an absolute time duration (in ms) and the measurement bandwidth can be configured in terms of PRBs and then converted to absolute frequency (in MHz). According to our understanding this is already agreed for the CLI-RSSI [3]:

- In information element of resource configuration for CLI-RSSI measurement, reference subcarrier spacing for CLI-RSSI measurement is included.

  ◦ All subcarrier spacings supported in Rel-15 NR for FR1, FR2
  ◦ Subcarrier spacing is a reference unit of time/frequency resource configuration.
  ◦ UE operates CLI measurement within the active BWP.

    ▪ The subcarrier spacing for CLI-measurement resource configuration can be same or different from the SCS of the active BWP.

**Observation 11 A reference subcarrier spacing in addition to the measurement duration (in symbols) and BW (in PRBs) for RSSI is already agreed for CLI-RSSI and can thus be used also for NR-U.**

In Rel-13 the carrier frequency is commonly configured for the complete measurement object, whereas in Rel-15 NR, the *ssbFrequency* and *refFreqCSI-RS* are configured separately (for the purposes of RSRP/RSRQ/SINR measurements). For independent RSSI and channel occupancy measurements where we are only interested in measuring aggregate power from all neighbor nodes, the reference frequency of the measurement bandwidth is not related to any SS/PBCH block or CSI-RS frequency. Thus, we propose a separate configuration for the reference frequency for the RSSI and channel occupancy measurement. According to our understanding this is not agreed for CLI-RSSI which is restricted to the active bandwidth part [3]:

> ➢ Agreement on measurement resource for RSSI measurement

- For measurement resource for RSSI measurement is configured by Symbol-level indication (e.g. starting OS and ending OS) and PRB level indication (e.g., starting PRB and ending PRB) within downlink active BWP

**Proposal 15 Support configuring a reference frequency (to support inter-frequency measurements i.e. not restricted to the active BWP) for the RSSI and channel occupancy measurement separately from the *ssbFrequency* and *refFreqCSI-RS* used for other Rel-15 measurements (not agreed for CLI-RSSI).**

In Rel-13, no L3 filtering is applied to RSSI and channel occupancy measurements. For CLI-RSSI, RAN2#106 has agreed that Layer 3 filtering is applied [4]:

- Layer 3 filtering is applied to the CLI-RSSI measurement.

To allow the same behavior for RSSI and channel occupancy for NR-U as in Rel-13 we propose to make the L3 filtering configurable for RSSI and channel occupancy measurements.

**Proposal 16 Support configurable L3 filter (including off) for RSSI and channel occupancy measurements.**

**Potential Modifications to the Rel-15 SMTC**

One remaining open item in the RRM area relates if any modifications of the Rel-15 NR SMTC window are needed:

◦ Any modification of the parameters of the Rel-15 SMTC for operation in unlicensed spectrum

In NR-Rel-15, an SMTC window for the purposes of RRM measurements is configured through the following SSB-MTC Information Element:

```
SSB-MTC ::=               SEQUENCE {
    periodicityAndOffset        CHOICE {
        sf5               INTEGER (0..4),
        sf10               INTEGER (0..9),
        sf20               INTEGER (0..19),
        sf40               INTEGER (0..39),
        sf80               INTEGER (0..79),
        sf160             INTEGER (0..159)
    },
    duration                ENUMERATED { sf1, sf2, sf3, sf4, sf5 }
}
```

Evidently, the periodicity and offset are configurable with periodicities ranging from 5 ms to 160 ms, and the duration field is configurable in a range of 1 ms to 5 ms.

In RAN1#96b it was agreed that the DRS transmission window is 5 ms. Given that, and that the SSB-MTC Information Element is already available, we think it is best to reuse it "as-is" for RRM measurements based on SS/PBCH. Adding a new information element would affect a number of other IEs such as e.g. *intraFreqCellReselectioninfo, InterFreqCarrierFreqInfo* and *MeasObjectNR.* Thus, we make the following proposal:

**Observation 12** The Rel-15 SMTC window can be used "as is," for configuring RRM measurement windows even when the SS/PBCH blocks shift in time due to LBT failures.

**4.2 RLM/RLF**

In Rel-15, an RRC_CONNECTED UE in NR is provided with up to X configurable and frequency-dependent reference signals that can be used for radio link monitoring (RLM). Both SS/PBCH block and CSI-RS can be used as RLM reference signals. The RLM-RS(s) can be explicitly configured to the UE. If they are not explicitly configured, then the UE uses the (periodic) CSI-RS contained in the TCI state that indicates the QCL source for PDCCH.

Hypothetical block error rate (BLER) is used to determine in-sync (IS) or out-of-sync (OOS) conditions for either of the reference signal types (SS/PBCH block or CSI-RS). A UE assumes to be IS, if the hypothetical BLER estimated on *at least one* out of the X configured RLM reference signals is below a configurable threshold. On the other hand, the UE assumes to be OOS, if the hypothetical BLER estimated on *all* configured RLM reference signals is above yet another configurable threshold.

Upon reception of enough OOS indications, the UE starts a timer, denoted by T310. If the radio link problem is not resolved upon T310 expiry, the UE declares radio link failure (RLF). Moreover, a failure in random access and/or RLC failure can also result in RLF. After the UE declares an RLF, it attempts an RRC Connection Re-establishment by trying to find a suitable cell. If that process is not successful within a certain time, the UE will enter RRC_IDLE state.

The intention of the RLM/RLF procedures is to prevent the UE from becoming unreachable by the network. Since hypothetical BLER estimation is performed on each RLM resource to indicate in-sync (IS) or out-of-sync (OOS), we need to consider how this should be reflected when an RLM reference signal is not transmitted due to LBT.

In the agreement from RAN1#96 in Section 3.2, the following FFS item is identified:

  ∘ FFS: Mechanism to handle missing RLM-RS due to LBT failure

An inherent problem for the UE is to reliably distinguish between missing RLM-RS transmissions and not detecting the RLM-RS due to low SINR. Another aspect is whether missing RLM-RS transmissions require explicit notification to the higher layer for specific actions.

Our view is that the UE should tolerate a certain amount of RLM-RS detection failures (by prolonging the in-synch and out-of-synch evaluation periods by $L_{in}$ and $L_{out}$ which is the number of missing SS/PBCH blocks during the evaluation periods) but at some limit, declare RLF. The limits of $L_{in}$ and $L_{out}$ are for RAN4 to decide. This is discussed in more detail in [5].

**Proposal 17 Mechanism to handle missing RLM-RS is up to RAN4 to decide.**

In the agreement from RAN1#96 in Section 3.2, the following FFS item is identified:

  ∘ FFS: Any relationship of RLM measurements based on CSI-RS to the measurement window.

Compared to Rel-15, NR-U operation will likely have fewer SS/PBCH block transmissions due to LBT failures and/or longer configured SS/PBCH block periods. As proposed in our companion contribution [1], we don't see a benefit of periodic CSI-RS for tracking (periodic TRS) in unlicensed systems. Use of aperiodic TRS, and aperiodic CSI-RS in general, is a more natural fit for unlicensed operation. For RLM, it makes sense that the UE could make use of aperiodic CSI-RS when triggered. Furthermore, the aperiodic CSI-RS would most likely be triggered inside a gNB acquired COT, which has no relationship to the DRS transmission window. Hence, the UE could be able to make use of ap-CSI-RS for RLM outside the DRS transmission window when needed. Increasing the number of samples used in RLM algorithms will invariably increase the measurement accuracy. That said, we propose to focus RAN1's efforts on SS/PBCH block based RLM before discussing mechanisms for including additional detected RLM-RS (such as aperiodic CSI-RS) in the evaluation.

**Proposal 18 Focus RAN1's efforts on SS/PBCH block based RLM before discussing mechanisms for including additional detected RLM-RS (such as aperiodic CSI-RS) in the evaluation.**

**5 Paging**

RAN2 has agreed to extend the PDCCH monitoring for paging. RAN2 also think that UE may stop monitoring the additional PDCCH monitoring occasions at paging occasions (PO) if it detects that gNB had access to the channel at the PO and the detection is reliable. RAN2 has agreed to use transmission addressed to P-RNTI for this purpose. RAN2 wonders whether there are other DL signals that can be reliably detected for this purpose [7].

First, we observe that the number of signals that the an IDLE/INACTIVE UE is aware of (either by configuration in system information or by explicit statements in the specification) are very limited. When in camped normally state 38.304 lists the following tasks that the UE shall perform:

- monitor the paging channel of the cell as specified in clause 7 according to information broadcast in *SIB1*;
- monitor Short Messages transmitted with P-RNTI over DCI as specified in clause 6.5 in TS 38.331;
- monitor relevant System Information as specified in TS 38.331;

- perform necessary measurements for the cell reselection evaluation procedure;
- execute the cell reselection evaluation process on the following occasions/triggers:

1) UE internal triggers, so as to meet performance as specified in TS 38.133 [8];
2) When information on the BCCH used for the cell reselection evaluation procedure has been modified.

The first two bullets are related to transmissions addressed to P-RNTI, which are already covered by the RAN2 agreement. What remains is monitoring of relevant system information and measurements for the cell reselection procedure. Even though we acknowledge that system information and SS/PBCH blocks (used in the cell reselection procedure) could be overlapping in time with the paging occasion, there is no guarantee that that will always be the case. Thus, we think it would be unfortunate if RAN2 defines behavior that couples the transmission of system information and SS/PBCH blocks with the paging occasions, restricting the scheduling flexibility for those signals and channels and the paging occasions.

**Proposal 19 Inform RAN2 that RAN1 considers the P-RNTI method for early paging monitoring termination already agreed in RAN2 to be sufficient.**

**6 Conclusion**

In the previous sections we made the following observations:

| | |
|---|---|
| **Observation 1** | **In case further flexibility is deemed essential cell specific values of Q can be introduced (SIB3/SIB4/MeasObjectNR) to override the frequency common value.** |
| **Observation 2** | **For the vast majority of uses cases when the UE is required to monitor Type0-PDCCH CSS, Q is known, and thus signaling Q in MIB is not motivated.** |
| **Observation 3** | **The DRS transmission window duration can be added to *ServingCellConfigCommonSIB* and *ServingCellConfigCommon.* For SCell, the window duration can be added to *SCell-Config.*** |
| **Observation 4** | **The Rel-15 mechanism of dynamically indicating resources not available for PDSCH can be used as a rate matching mechanism for SS/PBCH Block(s) in the DRS transmission window.** |
| **Observation 5** | **The *ssb-PositionsInBurst* IE can be configured as in Rel-15 NR, i.e. assuming no shift of the SS/PBCH Block(s).** |
| **Observation 6** | **Rel-15 NR already supports configurations so that the mapping of transmitted SS/PBCH blocks to RACH occasions is robust to LBT failures.** |
| **Observation 7** | **Scheduling of PRACH resources via DCI is an optimization and is not critical for the first release of NR-U. It can be considered for a later release in a backwards-compatible manner.** |
| **Observation 8** | **Mappings similar to group-wise SSB-to-RO mapping is already supported in NR Rel-15.** |
| **Observation 9** | **Multiple Msg3 TX opportunities with a single or multiple RARs in the time domain was deprioritized in RAN#84.** |
| **Observation 10** | **A configurable bandwidth for RSSI is already agreed for CLI-RSSI and can thus be used also for NR-U.** |
| **Observation 11** | **A reference subcarrier spacing in addition to the measurement duration (in symbols) and BW (in PRBs) for RSSI is already agreed for CLI-RSSI and can thus be used also for NR-U.** |
| **Observation 12** | **The Rel-15 SMTC window can be used "as is," for configuring RRM measurement windows even when the SS/PBCH blocks shift in time due to LBT failures.** |

Based on the discussion in the previous sections we propose the following:

| | |
|---|---|
| **Proposal 1** | **Support signaling of Q for the serving cell in SIB1 (*ServingCellConfigCommonSIB*).** |
| **Proposal 2** | **Support dedicated signaling of Q for a serving cell in *ServingCellConfigCommon*** |
| **Proposal 3** | **For RRM measurements (IDLE/INACTIVE/CONNECTED) support signaling one common Q per frequency (SIB2/SIB4/MeasObjectNR).** |

(continued)

| Proposal 4 | The absence of Q or e.g. the value Q=0 is indicative of that the UE shall apply the Rel-15 method of QCL and timing determination where SS/PBCH blocks do not shift in time. |
| Proposal 5 | No further down-selection if Q is necessary, i.e. support Q = {1,2,4,8}. |
| Proposal 6 | If Q is not known, candidate monitoring slots for Type0 PDCCH search space are all PDCCH monitoring slots in the DRS transmission window. |
| Proposal 7 | Support UE behavior to suppress PRACH, SR, and CG transmissions within the DRS transmission window. FFS: Optimizations such as allowing transmissions in slots not containing SS/PBCH, based on UE detecting one or more successful SS/PBCH block transmissions within the window. |
| Proposal 8 | Any PRACH occasion that overlaps with the DRS transmission window shall be considered invalid. |
| Proposal 9 | For RRC configured UL resources overlapping with the DRS transmission window, the UE can only perform UL transmissions in symbols known to the UE as being indicated as uplink by DCI_2_0. |
| Proposal 10 | Support explicit configuration of the DRS transmission window duration associated with the serving cell parameters ssb-*PositionsInBurst* and *ssb-PeriodicityServingCell.* |
| Proposal 11 | Scheduling of PRACH resources via DCI should not be supported in Rel-16. |
| Proposal 12 | The LBT type corresponding to the UL control signal is signaled in the DCI triggering the UL control signal transmission. LBT type field is included in: - DCI format 1_0 scrambled with RA-RNTI carrying the DL assignments for reception of the RAR messages (Msg2). The LBT type is applicable to Msg 3 transmission - DCI format 1_0 and 1_1 scrambled with C-RNTI carrying the DL assignments. The LBT type is applicable to the UL control signal transmission triggered by the DCI. |
| Proposal 13 | Inform RAN2 that the LBT category for msg 3 transmission is provided to the UE in the DCI carrying DL assignments for the RAR messages and that no further action is required by RAN2 on this matter. |
| Proposal 14 | RSSI and channel occupancy measurement reporting should be specified as additions to the already agreed framework for CLI-RSSI measurement reporting. |
| Proposal 15 | Support configuring a reference frequency (to support inter-frequency measurements i.e. not restricted to the active BWP) for the RSSI and channel occupancy measurement separately from the *ssbFrequency* and *refFreqCSI-RS* used for other Rel-15 measurements (not agreed for CLI-RSSI). |
| Proposal 16 | Support configurable L3 filter (including off) for RSSI and channel occupancy measurements. |
| Proposal 17 | Mechanism to handle missing RLM-RS is up to RAN4 to decide. |
| Proposal 18 | Focus RAN1's efforts on SS/PBCH block based RLM before discussing mechanisms for including additional detected RLM-RS (such as aperiodic CSI-RS) in the evaluation. |
| Proposal 19 | Inform RAN2 that RAN1 considers the P-RNTI method for early paging monitoring termination already agreed in RAN2 to be sufficient. |

## 7 References

[1] R1-1910945, "DL signals and channels for NR-U ", Ericsson, RAN1#98bis, October 2019.

[2] RP-191581, "Guidance on essential functionality for NR-U," RAN, RAN#84, June 2019.

[3] RP-190263, "Status report to TSG: Cross Link Interference (CLI) handling and Remote Interference Management (RIM) for NR", RAN#83, March 2019

[4] RP-191291, ""Status report to TSG: Cross Link Interference (CLI) handling and Remote Interference Management (RIM) for NR", RAN#84, June 2019

[5] R4-1912087, "On RLM in NR-U", RAN4#92bis, October 2019

[6] R4-1910573, "LS on RSSI definition", RAN4#92, August 2019

[7] R2-1911861, "LS on additional PDCCH monitoring occasions for paging for NR-U", RAN2#107, August 2019

[8] R1-1910947, "Channel access procedures", RAN1#98b, October 2019

**Claims**

1. A method (100), of a network node operating in a communication network, for synchronization signal and Physical Broadcast Channel, SS/PBCH, block management, the method comprising

    - determining (110) whether a network condition is met;
    - signalling (111, 113) to a communication terminal to apply a first detection method for SS/PBCH block detection when the network condition is determined to be met, the signalling being comprised in a master information block, MIB;
    - signalling (112, 113) to the communication terminal to apply a second detection method for SS/PBCH block detection when the network condition is determined not be met, the signalling being comprised in a master information block, MIB; and
    - transmitting (114) SS/PBCH blocks according to the second SS/PBCH block detection method, or according to the first SS/PBCH block detection method, based on whether the network condition is met, wherein transmitting (114) the SS/PBCH blocks according to the first detection method comprises:

        - transmitting (114) the SS/PBCH blocks at fixed time positions; and wherein transmitting (114) the SS/PBCH blocks according to the second detection method comprises:

            - transmitting (114) the SS/PBCH blocks at unfixed positions within a length of a transmission window.

2. The method according to claim 1, wherein the network condition relates to at least one of a current and/or a historical Listen Before Talk, LBT, success rate in the communication network, and wherein the network condition is determined to be met when at least one of the following is determined to be true: The current and/or historical LBT success rate is above a LBT-threshold.

3. The method of any of the previous claims 1-2, wherein the method further comprises

    - determining (112) a modulo parameter Q for determination of quasi co-location, QCL, of the SS/PBCH blocks and wherein the unfixed positions comprises a position i and an SS/PBCH block transmitted in position i is quasi co-located with an SS/PBCH block transmitted in position i+k*Q, where k=0,1,2,.., and where available positions in the transmission window is determined by sub-carrier spacing for the transmission wherein the unfixed positions are dependent on the outcome of one of a channel access procedure, a clear channel assessment procedure, or a listen-before-talk (LBT) procedure.

4. The method according to any of the previous claims 1-3, wherein signalling (111, 113) to the communication terminal to apply the first detection method comprises at least one of:

    - signalling (113) a flag to the communication terminal by setting (111) the flag in a system information, SI, message to be transmitted to the communication terminal; and signalling (113) the flag to the communication terminal through dedicated Radio Resource Control, RRC-signalling;
    - using (111, 113) a codepoint of one or more reserved bits in a PBCH-payload for indicating use of the first detection method;
    - coupling (111, 113) the first detection method to a first SS/PBCH block pattern; and
    - coupling (111, 113) the first detection method to a first SS/PBCH BLOCK synchronization, sync, raster point group.

5. The method according to any of the previous claims 1-4 wherein signalling (112, 113) to the communication terminal to apply the second detection method comprises at least one of:

    - configuring (112) the transmission window with at least a length or a duration parameter;

- configuring (112) a message comprising the determined Q parameter for the communication terminal;
- using (112) a codepoint in one or more reserved bits in a PBCH-payload to indicate use of the second detection method;
- coupling (112) the second detection method to a second SS/PBCH block pattern; and
- coupling (112) the second detection method to a second SS/PBCH BLOCK sync raster point group.

6. A method (200), of a communication terminal operating in a communication network, for synchronization signal/-Primary Block Channel, SS/PBCH, block, detection, the method comprising:

- receiving (210) signalling from a network node associated with the communication network, the signalling indicative of a SS/PBCH block detection method and comprised in a master information block, MIB,
- determining (211) whether the indicated SS/PBCH block detection method is a first SS/PBCH block detection method or a second SS/PBCH block detection method based on the received signalling, and
- applying (212, 213), based on the determination, the first or the second SS/PBCH block detection method for SS/PBCH block detection, wherein applying the first SS/PBCH block detection method comprises detecting SS/PBCH blocks at fixed time positions and wherein applying the second SS/PBCH block detection method comprises detecting SS/PBCH blocks at unfixed positions within a length of a transmission window.

7. The method according to claim 6, wherein the applying (212, 213) of the first or second SS/PBCH block detection method for SS/PBCH block detection is further based on a used frequency band of operation.

8. The method according to claim 6, wherein the applying (212, 213) of the first or second SS/PBCH block detection method for SS/PBCH block detection is further based on length or duration information about a transmission window.

9. The method according to any of the previous claims 6-8, wherein receiving signalling and determining (211) whether the indicated SS/PBCH block detection is the first or the second detection method comprises:

- receiving (210) a configuration of a transmission window;

- determining (211) whether the transmission window configuration comprises at least one of a length and duration parameter; and
- applying (213) the second SS/PBCH block detection method when it is determined that the transmission window configuration does comprise at least one of a length and duration parameter.

10. The method according to any of the previous claims 6-8, wherein receiving (210) signalling and determining (211) whether the indicated SS/PBCH block detection is the first or the second detection method comprises:

- receiving (210) a system information, SI, message or dedicated Radio Resource Control, RRC- signalling;
- determining (211)whether the received signalling comprises a flag; and

- applying (212) the first SS/PBCH block detection method when it is determined that the received signalling comprises a flag.

11. The method according to any of the previous claims 6-8, wherein receiving (210) signalling and determining (211) whether the indicated SS/PB channel block detection method is the first SS/PBCH block detection method or the second SS/PBCH BLOCK detection method comprises:

- receiving (210) a code point in one or more reserved bits in a Physical Broadcast Channel, PBCH, payload;, wherein at least one of the values 00, 01, 10 and 11 indicates the first SS/PBCH block detection method (211).

12. The method according to any of the previous claims 6-8, wherein receiving (210) signalling and determining (211) whether the indicated SS/PBCH block detection method is the first SS/PBCH block detection method or the second SS/PBCH block detection method comprises:

- receiving (210) an indication of a SS Block Pattern for reception of the SS/PBCH block;
- applying (212) the first SS/PBCH block detection method if the SS/PBCH pattern indication indicates a block pattern; and
- applying (213) the second SS/PBCH block detection method if the SS/PBCH pattern indication indicates a second block pattern.

13. The method according to any of the previous claims 6-8, wherein receiving (210) signalling and determining (211) whether the indicated SS/PBCH block detection method is the first SS/PBCH block detection method or the second SS/PBCH block detection method comprises:

- receiving (210) an indication of one or more SS/PBCH block synchronization, sync, raster point groups; and
- determining (211) whether the one or more SS/PBCH block sync raster point groups are indicative of the first or the second SS/PBCH block detection method.

14. The method according to any of the previous claims 6-8, wherein the received signalling comprises a modulo parameter Q for determination of quasi co-location, QCL, of the SS/PBCH blocks and wherein the unfixed positions comprises a position i and an SS/PBCH block transmitted in position i is quasi co-located with an SS/PBCH block transmitted in position $i+k*Q$, where $k=0,1,2,..$, and where available positions in the transmission window is determined by a sub-carrier spacing for the transmission.

15. A computer program product (300) comprising a non-transitory computer readable medium, wherein the non-transitory computer readable medium has stored there on a computer program comprising program instructions, wherein the computer program is configured to be loadable into a data-processing unit (310), comprising a processor (311) and a memory (312) associated with or integral to the data-processing unit (310), wherein when loaded into the data-processing unit (310), the computer program is configured to be stored in the memory (312), wherein the computer program, when loaded into and run by the processor (311) is configured to cause execution of method steps according to any of the methods described in conjunction with the claims 1-14.

16. An apparatus (400) of a network node comprising controlling circuitry (420) and configured for Synchronization Signal/Physical Broadcast Channel, SS/PBCH, block management, the controlling circuitry configured to cause:

- determination of whether a network condition is met;
- signalling to a communication terminal, to apply a first detection method for SS/PBCH block detection when it is determined that the network condition is met, the signalling being comprised in a master information block, MIB;
- signalling to the communication terminal to apply a second detection method for SS/PBCH block detection when it is determined that the network condition is not met, the signalling being comprised in a master information block, MIB; and
- transmission of SS/PBCH blocks according to the first SS/PBCH block detection method or the second SS/PBCH block detection method based on whether the network condition is determined to be met, wherein the controlling circuitry (420) is configured to cause transmission of the SS/PBCH blocks according to the first detection method by causing:

- transmission the SS/PBCH blocks at fixed time positions; and wherein causing transmission of the SS/PBCH blocks according to the second detection method comprises causing:

- transmission of the SS/PBCH at unfixed positions within a length of a transmission window.

17. An apparatus (500) of a wireless communication terminal comprising controlling circuitry (520) and configured for Synchronization Signal/Physical Broadcast Channel, SS/PBCH block detection, the controlling circuitry (520) configured to cause:

- reception of signalling from a network node associated with a communication network, the signalling indicative of a SS/PBCH block detection method and comprised in a master information block, MIB,
- determination of whether the indicated SS/PBCH block detection method is a first SS/PBCH block detection method or a second SS/PBCH block detection method, and
- application of the first or the second SS/PBCH block detection method, based on the determination wherein causing application of the first SS/PBCH block detection method comprises causing detection SS/PBCH of blocks at fixed time positions and wherein causing application of the second SS/PBCH block detection method comprises causing detection of SS/PBCH blocks at unfixed positions within a length of a transmission window.

**Patentansprüche**

1. Verfahren (100) zum Management von Synchronisationssignal- und Physical-Broadcast-Channel-Blöcken, SS/PBCH-Blöcken, durch einen Netzwerkknoten, der in einem Kommunikationsnetz betrieben wird, wobei das Verfahren umfasst:

    - Bestimmen (110), ob eine Netzwerkbedingung erfüllt ist;
    - Signalisieren (111, 113) an ein Kommunikationsterminal, ein erstes Detektionsverfahren zur SS/PBCH-Blockdetektion anzuwenden, wenn bestimmt wird, dass die Netzwerkbedingung erfüllt ist, wobei die Signalisierung in einem Master-Information-Block, MIB, enthalten ist;
    - Signalisieren (112, 113) an das Kommunikationsterminal, ein zweites Detektionsverfahren zur SS/PBCH-Blockdetektion anzuwenden, wenn bestimmt wird, dass die Netzwerkbedingung nicht erfüllt ist, wobei die Signalisierung in einem Master-Information-Block, MIB, enthalten ist; und
    - Übertragen (114) von SS/PBCH-Blöcken gemäß dem zweiten SS/PBCH-Blockdetektionsverfahren oder gemäß dem ersten SS/PBCH-Blockdetektionsverfahren, basierend darauf, ob die Netzwerkbedingung erfüllt ist, wobei das Übertragen (114) der SS/PBCH-Blöcke gemäß dem ersten Detektionsverfahren umfasst:

        - Übertragen (114) der SS/PBCH-Blöcke an festen Zeitpositionen; und wobei das Übertragen (114) der SS/PBCH-Blöcke gemäß dem zweiten Detektionsverfahren umfasst:

            - Übertragen (114) der SS/PBCH-Blöcke an nicht festen Positionen innerhalb einer Länge eines Übertragungsfensters.

2. Verfahren nach Anspruch 1, wobei sich die Netzwerkbedingung auf mindestens eines von einer aktuellen und/oder einer bisherigen Erfolgsrate bezüglich Listen-Before-Talk, LBT, im Kommunikationsnetz bezieht, und wobei bestimmt wird, dass die Netzwerkbedingung erfüllt ist, wenn mindestens eine der folgenden Bedingungen als wahr bestimmt wird: Die aktuelle und/oder bisherige LBT-Erfolgsrate liegt über einem LBT-Schwellenwert.

3. Verfahren nach einem der vorhergehenden Ansprüche 1 bis 2, wobei das Verfahren ferner umfasst - Bestimmen (112) eines Modulo-Parameters Q zur Bestimmung der Quasi-Co-Location, QCL, der SS/PBCH-Blöcke, und wobei die nicht festen Positionen eine Position i umfassen und ein an Position i übertragener SS/PBCH-Block quasi-ko-lokalisiert ist mit einem an Position i + k * Q übertragenen SS/PBCH-Block, wobei k = 0, 1, 2 ... und wobei verfügbare Positionen im Übertragungsfenster durch einen Subträgerabstand für die Übertragung bestimmt werden, wobei die nicht festen Positionen vom Ergebnis eines von einem Kanalzugriffsverfahren, einem Clear-Channel-Assessment-Verfahren oder einem Listen-Before-Talk-(LBT-)Verfahren abhängen.

4. Verfahren nach einem der vorhergehenden Ansprüche 1 bis 3, wobei das Signalisieren (111, 113) an das Kommunikationsterminal, das erste Detektionsverfahren anzuwenden, mindestens eines umfasst aus:

    - Signalisieren (113) eines Flags an das Kommunikationsterminal durch Setzen (111) des Flags in einer Systeminformationsnachricht, SI-Nachricht, die an das Kommunikationsterminal zu übertragen ist; und Signalisieren (113) des Flags an das Kommunikationsterminal durch dedizierte Signalisierung mittels Funkressourcensteuerung, RRC;
    - Verwenden (111, 113) eines Codepunkts eines oder mehrerer reservierter Bits in einer PBCH-Payload zur Anzeige der Verwendung des ersten Detektionsverfahrens;
    - Koppeln (111, 113) des ersten Detektionsverfahrens an ein erstes SS/PBCH-Blockmuster; und
    - Koppeln (111, 113) des ersten Detektionsverfahrens an eine erste SS/PBCH-BLOCK-Synchronisations-(Sync-) Rasterpunktgruppe.

5. Verfahren nach einem der vorhergehenden Ansprüche 1 bis 4, wobei das Signalisieren (112, 113) an das Kommunikationsterminal, das zweite Detektionsverfahren anzuwenden, mindestens eines umfasst aus:

    - Konfigurieren (112) des Übertragungsfensters mit mindestens einem Längen- oder einem Dauerparameter;
    - Konfigurieren (112) einer Nachricht, die den bestimmten Q-Parameter für das Kommunikationsterminal umfasst;
    - Verwenden (112) eines Codepunkts in einem oder mehreren reservierten Bits in einer PBCH-Payload, um die Verwendung des zweiten Detektionsverfahrens anzuzeigen;
    - Koppeln (112) des zweiten Detektionsverfahrens an ein zweites SS/PBCH-Blockmuster; und

- Koppeln (112) des zweiten Detektionsverfahrens an eine zweite SS/PBCH-BLOCK-Sync-Rasterpunktgruppe.

6. Verfahren (200) zur Detektion von Synchronisationssignal/Primary-Block-Channel-Blöcken, SS/PBCH-Blöcken, durch ein Kommunikationsterminal, das in einem Kommunikationsnetz betrieben wird, wobei das Verfahren umfasst:

   - Empfangen (210) von Signalisierung von einem Netzwerkknoten, der mit dem Kommunikationsnetz verbunden ist, wobei die Signalisierung ein SS/PBCH-Blockdetektionsverfahren anzeigt und in einem Master-Information-Block, MIB, enthalten ist;
   - Bestimmen (211), ob das angezeigte SS/PBCH-Blockdetektionsverfahren ein erstes SS/PBCH-Blockdetektionsverfahren oder ein zweites SS/PBCH-Blockdetektionsverfahren ist, basierend auf der empfangenen Signalisierung; und
   - Anwenden (212, 213), basierend auf der Bestimmung, des ersten oder des zweiten SS/PBCH-Blockdetektionsverfahrens zur SS/PBCH-Blockdetektion, wobei das Anwenden des ersten SS/PBCH-Blockdetektionsverfahrens das Detektieren von SS/PBCH-Blöcken an festen Zeitpositionen umfasst und wobei das Anwenden des zweiten SS/PBCH-Blockdetektionsverfahrens das Detektieren von SS/PBCH-Blöcken an nicht festen Positionen innerhalb einer Länge eines Übertragungsfensters umfasst.

7. Verfahren nach Anspruch 6, wobei das Anwenden (212, 213) des ersten oder zweiten SS/PBCH-Blockdetektionsverfahrens zur SS/PBCH-Blockdetektion ferner auf einem verwendeten Frequenzband des Betriebs basiert.

8. Verfahren nach Anspruch 6, wobei das Anwenden (212, 213) des ersten oder zweiten SS/PBCH-Blockdetektionsverfahrens zur SS/PBCH-Blockdetektion ferner auf Längen- oder Dauerinformationen über ein Übertragungsfenster basiert.

9. Verfahren nach einem der vorhergehenden Ansprüche 6 bis 8, wobei das Empfangen von Signalisierung und das Bestimmen (211), ob die angezeigte SS/PBCH-Blockdetektion das erste oder das zweite Detektionsverfahren ist, umfasst:

   - Empfangen (210) einer Konfiguration eines Übertragungsfensters;
   - Bestimmen (211), ob die Konfiguration des Übertragungsfensters mindestens eines von einem Längen- und einem Dauerparameter umfasst; und
   - Anwenden (213) des zweiten SS/PBCH-Blockdetektionsverfahrens, wenn bestimmt wird, dass die Konfiguration des Übertragungsfensters mindestens eines von einem Längen- oder einem Dauerparameter umfasst.

10. Verfahren nach einem der vorhergehenden Ansprüche 6 bis 8, wobei das Empfangen (210) von Signalisierung und das Bestimmen (211), ob die angezeigte SS/PBCH-Blockdetektion das erste oder das zweite Detektionsverfahren ist, umfasst:

    - Empfangen (210) einer Systeminformationsnachricht, SI-Nachricht, oder dedizierter Signalisierung mittels Funkressourcensteuerung, RRC;
    - Bestimmen (211), ob die empfangene Signalisierung ein Flag umfasst; und
    - Anwenden (212) des ersten SS/PBCH-Blockdetektionsverfahrens, wenn bestimmt wird, dass die empfangene Signalisierung ein Flag umfasst.

11. Verfahren nach einem der vorhergehenden Ansprüche 6 bis 8, wobei das Empfangen (210) von Signalisierung und das Bestimmen (211), ob das angezeigte SS/PB-Channel-Blockdetektionsverfahren das erste SS/PBCH-Blockdetektionsverfahren oder das zweite SS/PBCH-BLOCK-Detektionsverfahren ist, umfasst:

    - Empfangen (210) eines Codepunkts in einem oder mehreren reservierten Bits in einer Physical-Broadcast-Channel-Payload, PBCH-Payload; wobei mindestens einer der Werte 00, 01, 10 und 11 das erste SS/PBCH-Blockdetektionsverfahren (211) anzeigt.

12. Verfahren nach einem der vorhergehenden Ansprüche 6 bis 8, wobei das Empfangen (210) von Signalisierung und das Bestimmen (211), ob das angezeigte SS/PBCH-Blockdetektionsverfahren das erste SS/PBCH-Blockdetektionsverfahren oder das zweite SS/PBCH-Block-Detektionsverfahren ist, umfasst:

    - Empfangen (210) einer Anzeige eines SS-Blockmusters zum Empfang des SS/PBCH-Blocks;
    - Anwenden (212) des ersten SS/PBCH-Blockdetektionsverfahrens, wenn die Anzeige des SS/PBCH-Musters ein Blockmuster anzeigt; und
- Anwenden (213) des zweiten SS/PBCH-Blockdetektionsverfahrens, wenn die Anzeige des SS/PBCH-Musters ein zweites Blockmuster anzeigt.

13. Verfahren nach einem der vorhergehenden Ansprüche 6 bis 8, wobei das Empfangen (210) von Signalisierung und das Bestimmen (211), ob das angezeigte SS/PBCH-Blockdetektionsverfahren das erste SS/PBCH-Blockdetektionsverfahren oder das zweite SS/PBCH-Block-Detektionsverfahren ist, umfasst:

- Empfangen (210) einer Anzeige einer oder mehrerer SS/PBCH-Block-Synchronisations-(Sync-)Rasterpunktgruppen; und
- Bestimmen (211), ob die eine oder mehreren SS/PBCH-Block-Sync-Rasterpunktgruppen das erste oder das zweite SS/PBCH-Blockdetektionsverfahren anzeigen.

14. Verfahren nach einem der vorhergehenden Ansprüche 6 bis 8, wobei die empfangene Signalisierung einen Modulo-Parameter Q zur Bestimmung der Quasi-Co-Location, QCL, der SS/PBCH-Blöcke umfasst und wobei die nicht festen Positionen eine Position i umfassen und ein an Position i übertragener SS/PBCH-Block quasi-ko-lokalisiert ist mit einem an Position i + k * Q übertragenen SS/PBCH-Block, wobei k = 0, 1, 2 ... und wobei verfügbare Positionen im Übertragungsfenster durch einen Subträgerabstand für die Übertragung bestimmt werden.

15. Computerprogrammprodukt (300), umfassend ein nichtflüchtiges computerlesbares Medium, wobei auf dem nichtflüchtigen computerlesbare Medium ein Computerprogramm mit Programmanweisungen gespeichert ist, wobei das Computerprogramm so konfiguriert ist, dass es in eine Datenverarbeitungseinheit (310) ladbar ist, umfassend einen Prozessor (311) und einen Speicher (312), der mit der Datenverarbeitungseinheit (310) verbunden ist oder integraler Bestandteil davon ist, wobei das Computerprogramm, wenn es in die Datenverarbeitungseinheit (310) geladen wird, so konfiguriert ist, dass es im Speicher (312) gespeichert wird, wobei das Computerprogramm, wenn es in den Prozessor (311) geladen und von diesem ausgeführt wird, so konfiguriert ist, dass es die Ausführung von Verfahrensschritten gemäß einem der Verfahren verursacht, die in Verbindung mit den Ansprüchen 1 bis 14 beschrieben sind.

16. Einrichtung (400) eines Netzwerkknotens, die eine Steuerschaltung (420) umfasst und zum Management von Synchronisationssignal-/Physical-Broadcast Channel-Blöcken, SS/PBCH-Blöcken, konfiguriert ist, wobei die Steuerschaltung dazu konfiguriert ist, zu veranlassen:

- Bestimmen, ob eine Netzwerkbedingung erfüllt ist;
- Signalisieren an ein Kommunikationsterminal, ein erstes Detektionsverfahren zur SS/PBCH-Blockdetektion anzuwenden, wenn bestimmt wird, dass die Netzwerkbedingung erfüllt ist, wobei die Signalisierung in einem Master-Information-Block, MIB, enthalten ist;
- Signalisieren an das Kommunikationsterminal, das zweite Detektionsverfahren zur SS/PBCH-Blockdetektion anzuwenden, wenn bestimmt wird, dass die Netzwerkbedingung nicht erfüllt ist, wobei die Signalisierung in einem Master-Information-Block, MIB, enthalten ist; und
- Übertragen von SS/PBCH-Blöcken gemäß dem ersten SS/PBCH-Blockdetektionsverfahren oder dem zweiten SS/PBCH-Blockdetektionsverfahren basierend darauf, ob bestimmt wird, dass die Netzwerkbedingung erfüllt ist, wobei die Steuerschaltung (420) konfiguriert ist, die Übertragung der SS/PBCH-Blöcke gemäß dem ersten Detektionsverfahren zu veranlassen durch Veranlassen:

- einer Übertragung der SS/PBCH-Blöcke an festen Zeitpositionen; und wobei das Veranlassen der Übertragung der SS/PBCH-Blöcke gemäß dem zweiten Detektionsverfahren das Veranlassen umfasst von:

- einer Übertragung der SS/PBCH an nicht festen Positionen innerhalb einer Länge eines Übertragungsfensters.

17. Einrichtung (500) eines drahtlosen Kommunikationsterminals, die eine Steuerschaltung (520) umfasst und zum Detektieren von Synchronisationssignal-/Physical-Broadcast Channel-Blöcken, SS/PBCH-Blöcken, konfiguriert ist, wobei die Steuerschaltung dazu konfiguriert ist, zu veranlassen:

- Empfangen von Signalisierung von einem Netzwerkknoten, der mit einem Kommunikationsnetz verbunden ist, wobei die Signalisierung ein SS/PBCH-Blockdetektionsverfahren anzeigt und in einem Master-Information-Block, MIB, enthalten ist;

- Bestimmen, ob das angezeigte SS/PBCH-Blockdetektionsverfahren ein erstes SS/PBCH-Blockdetektionsverfahren oder ein zweites SS/PBCH-Blockdetektionsverfahren ist, und
- Anwendung des ersten oder des zweiten SS/PBCH-Blockdetektionsverfahrens basierend auf der Bestimmung, wobei das Veranlassen der Anwendung des ersten SS/PBCH-Blockdetektionsverfahrens das Veranlassen der Detektion von SS/PBCH-Blöcken an festen Zeitpositionen umfasst und wobei das Veranlassen der Anwendung des zweiten SS/PBCH-Blockdetektionsverfahrens das Veranlassen der Detektion von SS/PBCH-Blöcken an nicht festen Positionen innerhalb einer Länge eines Übertragungsfensters umfasst.

**Revendications**

1. Procédé (100), d'un nœud de réseau fonctionnant dans un réseau de communication, pour la gestion de blocs de signal de synchronisation et de canal de diffusion physique, SS/PBCH, le procédé comprenant :

   - la détermination (110) si une condition de réseau est remplie ;
   - la signalisation (111, 113) à un terminal de communication de réaliser une première méthode de détection pour la détection de blocs SS/PBCH lorsque la condition de réseau est déterminée comme étant remplie, la signalisation étant comprise dans un bloc d'informations maître, MIB ;
   - la signalisation (112, 113) au terminal de communication de réaliser une seconde méthode de détection pour la détection de blocs SS/PBCH lorsque la condition de réseau est déterminée comme n'étant pas remplie, la signalisation étant comprise dans un bloc d'informations maître, MIB ; et
   - la transmission (114) de blocs SS/PBCH selon la seconde méthode de détection de blocs SS/PBCH, ou selon la première méthode de détection de blocs SS/PBCH, selon que la condition de réseau est remplie ou non, dans lequel la transmission (114) des blocs SS/PBCH selon la première méthode de détection comprend :

     - la transmission (114) des blocs SS/PBCH à des positions temporelles fixes ; et dans lequel la transmission (114) des blocs SS/PBCH selon la seconde méthode de détection comprend :

       - la transmission (114) des blocs SS/PBCH à des positions non fixes à l'intérieur d'une longueur d'une fenêtre de transmission.

2. Procédé selon la revendication 1, dans lequel la condition de réseau se rapporte à au moins l'un d'un taux de réussite d'écoute avant émission, LBT, actuel et/ou historique dans le réseau de communication, et dans lequel la condition de réseau est déterminée comme étant remplie lorsqu'au moins l'un des points suivants est déterminé comme étant vrai : le taux de réussite LBT actuel et/ou historique est supérieur à un seuil LBT.

3. Procédé selon l'une quelconque desrevendications précédentes 1 à 2, dans lequel le procédé comprend en outre la détermination (112) d'un paramètre modulo Q pour la détermination de quasi-colocalisation, QCL, des blocs SS/PBCH et dans lequel les positions non fixes comprennent une position i et un bloc SS/PBCH transmis en position i est quasi-colocalisé avec un bloc SS/PBCH transmis en position i+k*Q, où k=0,1,2,.., et où des positions disponibles dans la fenêtre de transmission sont déterminées par un espacement de sous-porteuses pour la transmission dans lequel les positions non fixes dépendent du résultat de l'une d'une procédure d'accès au canal, d'une procédure d'évaluation de canal libre, ou d'une procédure d'écoute avant émission, LBT.

4. Procédé selon l'une quelconque desrevendications précédentes 1 à 3, dans lequel la signalisation (111, 113) au terminal de communication de réaliser la première méthode de détection comprend au moins l'un de :

   - la signalisation (113) d'un indicateur au terminal de communication par le réglage (111) de l'indicateur dans un message d'informations de système, SI, devant être transmis au terminal de communication ; et la signalisation (113) de l'indicateur au terminal de communication par l'intermédiaire d'une signalisation de commande de ressources radio, RRC, dédiée ;
   - l'utilisation (111, 113) d'un point de code d'un ou plusieurs bits réservés dans une charge utile PBCH pour indiquer l'utilisation de la première méthode de détection ;
   - le couplage (111, 113) de la première méthode de détection à un premier motif de blocs SS/PBCH ; et
   - le couplage (111, 113) de la première méthode de détection à un premier groupe de points de raster de synchronisation, sync, de blocs SS/PBCH.

5. Procédé selon l'une quelconque des revendications précédentes 1 à 4, dans lequel la signalisation (112, 113) au terminal de communication de réaliser la seconde méthode de détection comprend au moins l'un de :

- la configuration (112) de la fenêtre de transmission avec au moins un paramètre de longueur ou de durée ;
- la configuration (112) d'un message comprenant le paramètre Q déterminé pour le terminal de communication ;
- l'utilisation (112) d'un point de code dans un ou plusieurs bits réservés dans une charge utile PBCH pour indiquer l'utilisation de la seconde méthode de détection ;
- le couplage (112) de la seconde méthode de détection à un second motif de blocs SS/PBCH ; et
- le couplage (112) de la seconde méthode de détection à un second groupe de points de raster de synchronisation de blocs SS/PBCH.

6. Procédé (200), d'un terminal de communication fonctionnant dans un réseau de communication, pour la détection de blocs de signal de synchronisation/canal de bloc primaire, SS/PBCH, le procédé comprenant :

- la réception (210) d'une signalisation provenant d'un nœud de réseau associé au réseau de communication, la signalisation étant indicative d'une méthode de détection de blocs SS/PBCH et comprise dans un bloc d'informations maître, MIB,
- la détermination (211) si la méthode de détection de blocs SS/PBCH indiquée est une première méthode de détection de blocs SS/PBCH ou une seconde méthode de détection de blocs SS/PBCH sur la base de la signalisation reçue, et
- l'application (212, 213), sur la base de la détermination, de la première ou de la seconde méthode de détection de blocs SS/PBCH pour la détection de blocs SS/PBCH, dans lequel l'application de la première méthode de détection de blocs SS/PBCH comprend la détection de blocs SS/PBCH à des positions temporelles fixes et dans lequel l'application de la seconde méthode de détection de blocs SS/PBCH comprend la détection de blocs SS/PBCH à des positions non fixes à l'intérieur d'une longueur d'une fenêtre de transmission.

7. Procédé selon la revendication 6, dans lequel l'application (212, 213) de la première ou de la seconde méthode de détection de blocs SS/PBCH pour la détection de blocs SS/PBCH est en outre basée sur une bande de fréquences de fonctionnement utilisée.

8. Procédé selon la revendication 6, dans lequel l'application (212, 213) de la première ou de la seconde méthode de détection de blocs SS/PBCH pour la détection de blocs SS/PBCH est en outre basée sur des informations de longueur ou de durée concernant une fenêtre de transmission.

9. Procédé selon l'une quelconque des revendications précédentes 6 à 8, dans lequel la réception de la signalisation et la détermination (211) si la détection de blocs SS/PBCH indiquée est la première ou la seconde méthode de détection comprennent :

- la réception (210) d'une configuration d'une fenêtre de transmission ;
- la détermination (211) si la configuration de fenêtre de transmission comprend au moins l'un d'un paramètre de longueur et de durée ; et
- l'application (213) de la seconde méthode de détection de blocs SS/PBCH lorsqu'il est déterminé que la configuration de fenêtre de transmission comprend au moins l'un d'un paramètre de longueur et de durée.

10. Procédé selon l'une quelconque desrevendications précédentes 6 à 8, dans lequel la réception (210) d'une signalisation et la détermination (211) si la détection de blocs SS/PBCH indiquée est la première ou la seconde méthode de détection comprennent :

- la réception (210) d'un message d'informations de système, SI, ou d'une signalisation de commande de ressources radio, RRC, dédiée ;
- la détermination (211) si la signalisation reçue comprend un indicateur ; et
- l'application (212) de la première méthode de détection de blocs SS/PBCH lorsqu'il est déterminé que la signalisation reçue comprend un indicateur.

11. Procédé selon l'une quelconque desrevendications précédentes 6 à 8, dans lequel la réception (210) d'une signalisation et la détermination (211) si la méthode de détection de blocs de canal SS/PB est la première méthode de détection de blocs SS/PBCH ou la seconde méthode de détection de blocs SS/PBCH comprennent :

- la réception (210) d'un point de code dans un ou plusieurs bits réservés dans une charge utile de canal de diffusion physique, PBCH ; dans lequel au moins l'une des valeurs 00, 01, 10 et 11 indique la première méthode de détection de blocs SS/PBCH (211).

12. Procédé selon l'une quelconque desrevendications précédentes 6 à 8, dans lequel la réception (210) d'une signalisation et la détermination (211) si la méthode de détection de blocs SS/PBCH indiquée est la première méthode de détection de blocs SS/PBCH ou la seconde méthode de détection de blocs SS/PBCH comprennent :

- la réception (210) d'une indication d'un motif de blocs SS pour la réception du bloc SS/PBCH ;
- l'application (212) de la première méthode de détection de blocs SS/PBCH si l'indication de motif SS/PBCH indique un motif de blocs ; et
- l'application (213) de la seconde méthode de détection de blocs SS/PBCH si l'indication de motif SS/PBCH indique un second motif de blocs.

13. Procédé selon l'une quelconque desrevendications précédentes 6 à 8, dans lequel la réception (210) d'une signalisation et la détermination (211) si la méthode de détection de blocs SS/PBCH indiquée est la première méthode de détection de blocs SS/PBCH ou la seconde méthode de détection de blocs SS/PBCH comprennent :

- la réception (210) d'une indication d'un ou plusieurs groupes de points de raster de synchronisation, sync, de blocs SS/PBCH ; et
- la détermination (211) si les un ou plusieurs groupes de points de raster de synchronisation de blocs SS/PBCH sont indicatifs de la première ou de la seconde méthode de détection de blocs SS/PBCH.

14. Procédé selon l'une quelconque desrevendications précédentes 6 à 8, dans lequel la signalisation reçue comprend un paramètre modulo Q pour la détermination de quasi-colocalisation, QCL, des blocs SS/PBCH et dans lequel les positions non fixes comprennent une position i et un bloc SS/PBCH transmis en position i est quasi-colocalisé avec un bloc SS/PBCH transmis en position i+k*Q, où k=0,1,2,.., et où des positions disponibles dans la fenêtre de transmission sont déterminées par un espacement de sous-porteuses pour la transmission.

15. Produit programme informatique (300) comprenant un support lisible par ordinateur non transitoire, dans lequel le support lisible par ordinateur non transitoire a, stocké sur celui-ci, un programme informatique comprenant des instructions de programme, dans lequel le programme informatique est configuré pour pouvoir être chargé dans une unité de traitement de données (310), comprenant un processeur (311) et une mémoire (312) associée à ou intégrée à l'unité de traitement de données (310), dans lequel, lorsqu'il est chargé dans l'unité de traitement de données (310), le programme informatique est configuré pour être stocké dans la mémoire (312), dans lequel le programme informatique, lorsqu'il est chargé dans et exécuté par le processeur (311), est configuré pour provoquer l'exécution d'étapes de procédé selon l'un quelconque des procédés décrits en relation avec les revendications 1 à 14.

16. Appareil (400) d'un nœud de réseau comprenant une circuiterie de commande (420) et configuré pour la gestion de blocs de signal de synchronisation/canal de diffusion physique, SS/PBCH, la circuiterie de commande étant configurée pour provoquer :

- la détermination si une condition de réseau est remplie ;
- la signalisation à un terminal de communication de réaliser une première méthode de détection pour la détection de blocs SS/PBCH lorsqu'il est déterminé que la condition de réseau est remplie, la signalisation étant comprise dans un bloc d'informations maître, MIB ;
- la signalisation au terminal de communication de réaliser une seconde méthode de détection pour la détection de blocs SS/PBCH lorsqu'il est déterminé que la condition de réseau n'est pas remplie, la signalisation étant comprise dans un bloc d'informations maître, MIB ; et
- la transmission de blocs SS/PBCH selon la première méthode de détection de blocs SS/PBCH ou la seconde méthode de détection de blocs SS/PBCH selon que la condition de réseau est remplie ou non, dans lequel la circuiterie de commande (420) est configurée pour provoquer la transmission des blocs SS/PBCH selon la première méthode de détection en provoquant :

  - la transmission des blocs SS/PBCH à des positions temporelles fixes ; et dans lequel le fait de provoquer la transmission des blocs SS/PBCH selon la seconde méthode de détection comprend le fait de provoquer :

    - la transmission du SS/PBCH à des positions non fixes à l'intérieur d'une longueur d'une fenêtre de transmission.

**17.** Appareil (500) d'un terminal de communication sans fil comprenant une circuiterie de commande (520) et configuré pour la détection de blocs de signal de synchronisation/canal de diffusion physique, SS/PBCH, la circuiterie de commande (520) étant configurée pour provoquer :

- la réception d'une signalisation provenant d'un nœud de réseau associé à un réseau de communication, la signalisation étant indicative d'une méthode de détection de blocs SS/PBCH et comprise dans un bloc d'informations maître, MIB,
- la détermination si la méthode de détection de blocs SS/PBCH indiquée est une première méthode de détection de blocs SS/PBCH ou une seconde méthode de détection de blocs SS/PBCH, et
- l'application de la première ou de la seconde méthode de détection de blocs SS/PBCH, sur la base de la détermination, dans lequel le fait de provoquer l'application de la première méthode de détection de blocs SS/PBCH comprend le fait de provoquer la détection de blocs SS/PBCH à des positions temporelles fixes et dans lequel le fait de provoquer l'application de la seconde méthode de détection de blocs SS/PBCH comprend le fait de provoquer la détection de blocs SS/PBCH à des positions non fixes à l'intérieur d'une longueur d'une fenêtre de transmission.

100

```
       110                    N        112
     Network           ───────────► Conf for 2nd
    condition                         method
      met                               │
       ?                                │
       │                                ▼
       │ Y                            113
       ▼                        Signal conf to UE
     111                              │
  Conf for 1st  ──────────────►       │
    method                            ▼
                                     114
                                   Transmit
```

# FIG. 1

200

```
       210                   211        N        213
   Receive ind of 1st  ───►  1st   ───────────► Apply 2nd method
     or 2nd method          Method
                              ?
                              │
                              │ Y
                              ▼
                             212
                        Apply 1st method
```

# FIG. 2

300

```
        ┌──────────────────────────┐
        │ 310                       │
        │  ┌────────┐   ┌────────┐  │
        │  │  311   │   │  312   │  │
        │  │  PROC  │   │  MEM   │  │
        │  └────────┘   └────────┘  │
        └──────────────────────────┘
```

# FIG. 3

410
RX/TX

422
DET

421
CONF

420 CNTR

400

## FIG. 4

510
RX/TX

522
DET

520 CNTR

500

## FIG. 5

## REFERENCES CITED IN THE DESCRIPTION

**Patent documents cited in the description**

- US 2018220442 A1

**Non-patent literature cited in the description**

- **ERICSSON**. Enhancement to initial access procedure. *R1-1909299*, 17 August 2019, vol. RAN WG1 (Prague)
- **ERICSSON**. Enhancements to initial access procedure. *3GPP TSG-RAN WG1 Meeting #98bis, R1-1910948*, 14 October 2019
- **ERICSSON**. DL signals and channels for NR-U. *R1-1910945*, October 2019
- Guidance on essential functionality for NR-U. *RP-191581*, June 2019
- Status report to TSG: Cross Link Interference (CLI) handling and Remote Interference Management (RIM) for NR. *RP-190263*, March 2019
- Status report to TSG: Cross Link Interference (CLI) handling and Remote Interference Management (RIM) for NR. *RP-191291*, June 2019
- On RLM in NR-U. *R4-1912087*, October 2019
- LS on RSSI definition. *R4-1910573*, August 2019
- LS on additional PDCCH monitoring occasions for paging for NR-U. *R2-1911861*, August 2019
- Channel access procedures. *R1-1910947*, October 2019